# EUROPEAN PATENT SPECIFICATION

(11) **EP 1 950 340 B1**
(45) Date of publication and mention of the grant of the patent: **21.11.2012**
(21) Application number: 08250235.2
(22) Date of filing: 18.01.2008
(51) Int. Cl.: D21B 1/32, D21F 9/00

(54) **Cleaning method and system for used paper recycling apparatus**
Reinigungsverfahren und -system für eine Vorrichtung zum Recycling von gebrauchtem Papier
Procédé de nettoyage et système pour appareil de recyclage de papier usé

(30) Priority: 26.01.2007 JP 2007017198
(43) Date of publication of application: 30.07.2008
(73) Proprietor: Seed Co., Ltd., Osaka-shi, Osaka (JP)
(72) Inventor: Tamai, Shigeru, c/o Seed Co. Ltd., Osaka-shi, Osaka (JP); Koyama, Yuji, c/o Seed Co. Ltd., Osaka-shi, Osaka (JP)
(74) Representative: Mounteney, Simon James

(56) References cited:
- EP-A- 1 746 201

## Description

### BACKGROUND OF THE INVENTION

### Field of the Invention

The invention relates to a cleaning method and a system for used paper recycling apparatus, and more particularly to a cleaning technology for cleaning the component part of the apparatus in a used paper recycling apparatus of furniture size installed at the site of origin of used paper, for recycling and processing into reusable paper at the site without discarding the generated used paper.

### Description of the Related Art

Used paper of various types occurs not only in government offices or private companies, but also in daily life or general household. Used paper is usually discarded, incinerated, or disposed as refuse.

On the other hand, in the global concern about effective use of limited resources on earth, various technologies have been developed to regenerate and reuse the used paper being disposed and discarded so far.

Such used paper recycling technologies are mostly installed in paper making industry, and the used paper recycling plant requires, like the ordinary paper making plant, a vast land, an immense investment, and a huge quantity of water and chemicals for the purpose of high speed and mass production and high quality of recycled paper.

For recycling of used paper, a tremendous manual labor is needed for collecting used paper, and used paper collection involves various problems, such as mixing of foreign matter by garbage collectors, defective classification due to lack of knowledge about used paper recycling, and entry of harmful objects, and if used paper is collected, in order to recycle by 100 percent, final checking by specialists and cleaning works are needed. On the other hand, confidential documents are not easily recycled and are mostly incinerated, and the recycling rate is low.

To solve these problems of used paper recycling, an effective method is the technology capable of recycling at the site of origin of used paper, and from such point of view, a new system, is proposed, for example, in Japanese Patent Application Laid-Open No. H06-134331.

This apparatus is a wet process shredder for shredding used paper into small pieces while adding a small amount of water, and shredded chips from the shredder are sent outside to a recycling plant, and used as material for recycled paper.

Shredded chips from the shredder are deformed into pulp, and are not in the state of piece of paper, and a high confidentiality is guaranteed, and it is expected to promote recycling of confidential documents.

This wet process shredder is a giant machine installed in a wide space, and it can be used only in a large office, and it Is not suited to small office or general household. If shredded chips may be used as material for recycled paper, processing is possible only in large recycling plant, and the recycling cost is high and it is not economical.

EP1746201 discloses a furniture-sized used paper processing apparatus that provides a solution to a number of the problems discussed above.

### BRIEF SUMMARY OF THE INVENTION

It is a primary object of the invention to present a cleaning technology for realizing a novel used paper recycling apparatus of furniture size capable of solving such conventional problems.

It is other object of the invention to present a cleaning technology for realizing a used paper recycling apparatus of furniture size to be installed not only in a large office, but also in a small shop or a room in general household, friendly to the environment and low in running cost, capable of preventing leak of confidential information, private information, and other information, and keeping a high confidentiality.

It is another object of the invention to present a used paper recycling apparatus comprising such cleaning technology.

To achieve these objects, a first aspect of the present invention provides a cleaning method for cleaning apparatus sections of a furniture-sized used paper recycling apparatus as set out in Claim 1.

Preferred features of this aspect of the invention are set out in Claims 2 to 4.

A second aspect of the invention provides a cleaning system for cleaning apparatus sections of a furniture-sized used paper recycling apparatus as set out in Claim 5. Preferred features of this aspect of the invention are set out in Claims 6 to 8.

A third aspect of the invention provides a furniture-sized used paper recycling apparatus as set out in Claim 9.

According to the cleaning method of the invention, In the used paper recycling apparatus including, in an apparatus case of furniture size small enough to be installed at the site of origin of used paper, a pulp making section for manufacturing used paper pulp by macerating and mashing used paper, a pulp concentration adjusting section for adjusting the concentration of used paper pulp manufactured in this pulp making section, and a paper making section for manufacturing recycled paper by making the used paper pulp manufactured in the pulp making section, the water dewatered and collected in the paper making section is circulated as cleaning water at least in the pulp making section and pulp concentration adjusting section, so that the pulp making section and pulp concentration adjusting section may be cleaned, and therefore the used paper pulp remaining in the component parts can cleaned and removed, and the residual used paper pulp is prevented from being dried to stick to the valves and pumps of the components to cause troubles, and failure in concentration adjustment due to residual used paper pulp may be avoided.

In the used paper recycling apparatus of the invention having the cleaning system of the invention, the following outstanding effects are obtained, and the used paper recycling apparatus of the invention can be installed not only in a large office, but also in a small shop or ordinary household, and is friendly to the environment and low in running cost, and capable of preventing leak of confidential information, private information, and other information, and keeping a high confidentiality.
(1) The used paper recycling apparatus of small and simple structure is realized by including, in an apparatus case of furniture size, a pulp making section for manufacturing used paper pulp by macerating and mashing used paper, and a paper making section (paper machine) for manufacturing recycled paper by making the used paper pulp manufactured in the pulp making section, and therefore without discarding the used paper, the used paper is recycled and reused at the same site of origin, and disposal of used paper is reduced, and refuse problems can be solved, and the limited resources can be utilized effectively.
   Hitherto, because of confidential problems, recycling of used paper has not been promoted, but since the used paper can be recycled and reused at the same site of origin, effects of effective utilization of resources are outstanding.
(2) At the site of origin of used paper, a compact used paper recycling system having a same function as large scale system installed in paper making plant or used paper recycling plant is installed, and used paper can be recycled continuously in a closed circuit in a small shop or general household, and refuse collection and transportation expenses and incineration and other costs are saved, and it is very economical.
(3) The apparatus structure is compact, and it can be installed not only in large office, but also in small shop or general household, and from this point of view, too, leak of confidential information and private information can be securely prevented.
(4) Being installed at the site of origin of used paper, the pulp making section macerates the used paper into used paper pulp, and the paper making section manufactures the used paper pulp into recycled paper, and information of characters and patterns printed on the paper is not diffused outside of the site of origin of used paper, and leak of confidential information and private information can be prevented securely, and a high confidentiality is assured, and the limited resources can be used effectively.

That is, by using the used paper recycling apparatus of the invention, it is free from risk of external diffusion of information from a specific institute (for example, school, hospital, city office, law firm, patent office, general household).

In other words, in the case of a conventional shredder, if the used paper is shredded into small chips, and the printed characters and patterns are not legible, the shredded chips are incinerated, and external diffusion cannot be prevented perfectly. In this regard, the waste chips may be stored within an internal warehouse, but storing place is needed, and the resources are used only once and are not utilized effectively.

By contrast, according to the used paper recycling apparatus of the invention, the information printed on the used paper is not diffused outside of the closed system, and the resources can be utilized effectively.

These and other features and objects of the invention will be more clearly appreciated and understood from the following detailed description given together with the accompanying drawings and novel facts disclosed in the claims.

### BRIEF DESCRIPTION OF THE DRAWINGS

Fig. 1 is a front view of entire structure of the used paper recycling apparatus in preferred embodiment 1 of the invention, showing a cut-away view of apparatus case.
Fig. 2 is a side view of entire structure of the used paper recycling apparatus, showing a cut-away view of apparatus case.
Fig. 3 is a front sectional view showing essential parts of mashing unit of pulp making section in the used paper recycling apparatus.
Fig. 4 is a schematic view of entire structure of the used paper recycling apparatus.
Fig. 5 is a perspective view of outline of paper making section of the used paper recycling apparatus.
Fig. 6 is a plan view of drive coupling mechanism in the paper making section.
Fig. 7 is a magnified perspective view of pulp feeder in the paper making section.
Fig. 8 is a partially cut-away front view of the pulp feeder.
Fig. 9A is a block diagram of specific mechanism of squeezing and dewatering of dewatering roll unit in the paper making section, showing a basic squeezing and dewatering mechanism.
Fig. 9B is a block diagram of specific mechanism of squeezing and dewatering of dewatering roll unit in the paper making section, showing a squeezing and dewatering mechanism when the slurry preventive roll is provided near the upstream side of the dewatering roll unit.
Fig. 10 is a perspective view of outline of the used paper recycling apparatus.
Fig. 11 is a front view of entire structure of used paper recycling apparatus in preferred embodiment 2 of the invention, showing a cut-away view of apparatus case.
Fig. 12 is a schematic view of entire structure of the used paper recycling apparatus.

### DETAILED DESCRIPTION OF THE PREFERRED EMBODIMENTS

Preferred embodiments of the invention are specifically described below while referring to the accompanying drawings. Throughout the drawings, same parts or elements are identified with same reference numerals.

### Preferred Embodiment 1

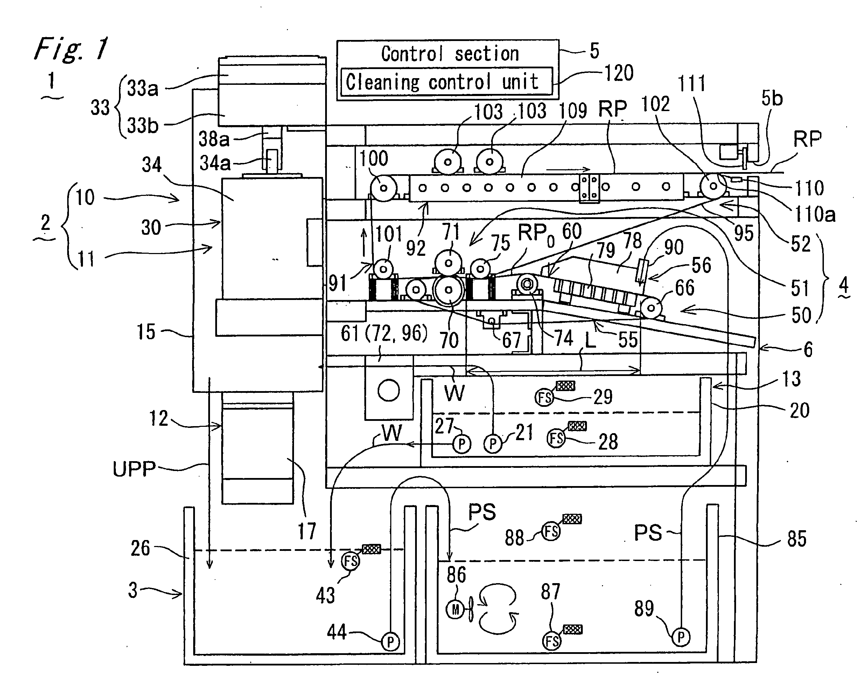

A used paper recycling apparatus of the invention is shown in Fig. 1 to Fig. 10, and this used paper recycling apparatus 1 is specifically installed at the site of origin of used paper, and it is an apparatus for manufacturing recycled paper at the site without disposing or discarding the used paper UP, and such used paper UP includes confidential documents occurring in government offices and private companies, and private letters in general household, and other used and unnecessary documents.

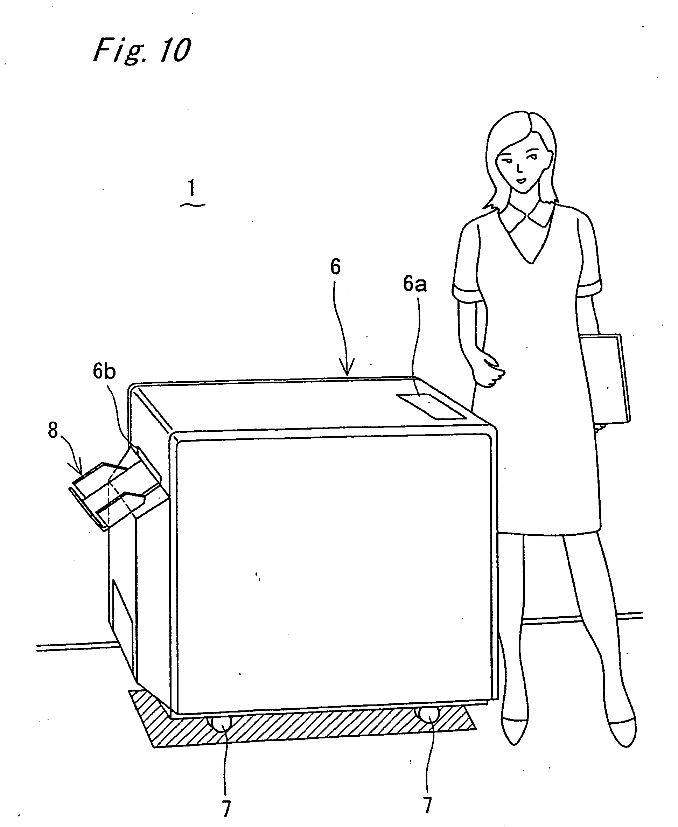

The used paper recycling apparatus 1 has a furniture size as shown in Fig. 10, that is, size and shape similar to office equipment, such as document rack, locker, desk, copier, or personal computer, and is mainly composed of a pulp making section 2, a pulp concentration section 3, a paper making section 4, and a control section 5 as shown in Fig. 1, and it also includes a cleaning system CS for cleaning these sections, specifically the pulp making section 2 and pulp concentration adjusting system 3. The pulp making section 2, pulp concentration section 3, paper making section 4, control section 5, and cleaning system CS are contained in an apparatus case 6 in a compact design, and a drive source of the pulp making section 2 and paper making section 4 is a drive source driven by a general household alternating-current power source.

The apparatus case 6 has a furniture size as mentioned above, and the specific dimensions and shape are designed properly depending on the purpose and application. The apparatus case 6 in the illustrated preferred embodiment is a box having dimensions and shape like a copier used in an office, and its bottom is provided with casters 7, 7, ... as moving means so as to be moved freely on the floor. In the ceiling of the apparatus case 6, an inlet 6a is provided for supplying used paper UP, and a detachable recycled paper receive tray 8 is provided in the side surface for receiving recycled paper RP, RP, .... A discharge port 6b of the apparatus case 6 is provided oppositely to the recycled paper receive tray 8, and recycled paper RP, RP, ... discharged from the discharge port 6b are received sequentially in layers.

The pulp making section 2 is a process unit for manufacturing used paper pulp by macerating and mashing used paper UP, and is composed of a macerating unit 10 for agitating, grinding, and macerating the used paper UP, and a mashing unit 11 for mashing the used paper UP macerated in the macerating unit 10, and in the illustrated preferred embodiment, the macerating unit 10 and mashing unit 11 circulate the used paper UP for a specified time.

The macerating unit 10 includes an agitating device 12 for agitating the used paper UP, and a water feed unit 13 for supplying water into the agitating device 12.

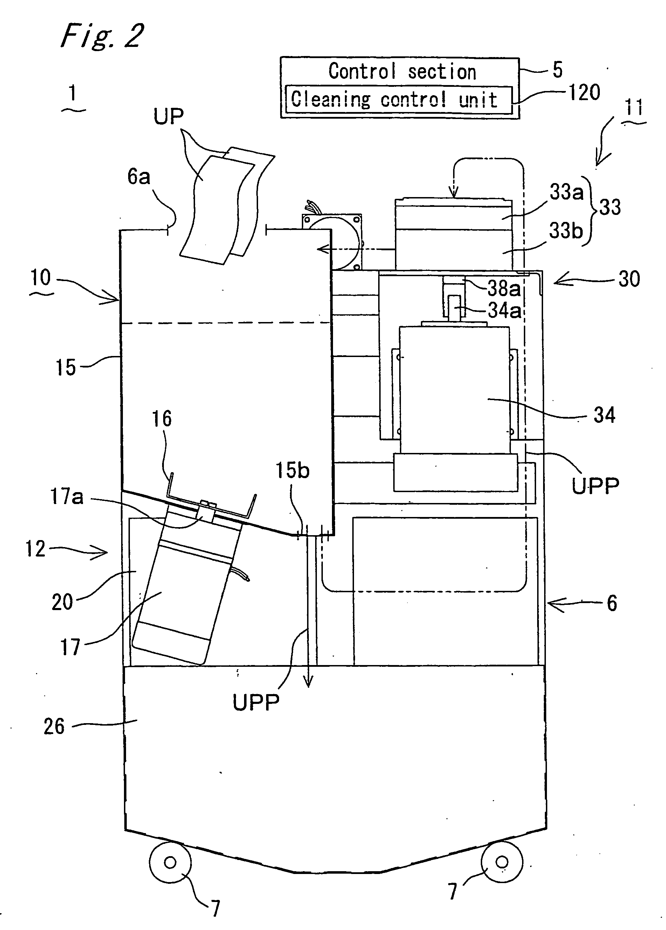

The agitating device 12 includes an agitating tank 15, an agitating impeller 16, and a drive motor 17. The agitating tank 15 is shown in Fig. 2, in which a closable inlet 6a is provided outside of the apparatus case 6 in the ceiling wall, and the agitating impeller 16 is rotatably provided in the inside. The inner volume of the agitating tank 15 is determined depending on the number of sheets of used paper UP to be agitated in batch. In the illustrated preferred embodiment, the agitating tank 15 is supposed to agitate about 25 sheets (about 100 g) of used paper UP of A4 format plain paper copier (PPC) in batch process by adding about 5 liters of water.

The agitating impeller 16 is provided in an inclined bottom of the agitating tank 15, and is driven by and coupled to a rotary shaft 17a of the drive motor 17, and is rotated normally and reversely by the drive motor 17 continuously or intermittently. The drive motor 17 is specifically an electric motor, and the drive motor 17 is electrically connected to the control section 5.

When the agitating impeller 16 is rotated normally and reversely, the used paper UP, if agitated in the size of A4 format, is effectively dispersed by the jet action of water by normal rotation followed by reverse rotation of the agitating impeller 16, and entangling on the agitating impeller 16 can be effectively prevented, so that the used paper UP, UP, ... may be uniformly macerated and mashed.

The water feed unit 13 is composed of white water collect tank 20 and water feed pump 21 as shown in Fig. 1. The white water collect tank 20 is designed to collect white water filtered and dewatered in the paper making section 4 (pulp water of ultralow concentration filtered by the paper making mesh in the paper making process), and the white water W collected in the white water collect tank 20 is supplied as water for agitation into the agitation tank 15 of the agitating device 12 by the water feed pump 21.

The water feed unit 13 also functions, as described below, as a concentration adjusting water feeder (water feeding means) of pulp concentration adjusting section 3, and as a cleaning water feed source for the cleaning system CS, and the feed water pump 21 functions as water feed pump for the cleaning system CS, and a concentration adjusting water feed pump 27 for supplying water for adjusting the concentration into the concentration adjusting tank 26 of the pulp concentration adjusting section 3 is provided in the white water collect tank 20. Reference numerals 28 and 29 are respectively lower limit water level float switch and upper limit water level float switch provided in the white water collect tank 20.

The water feed source of the water feed unit 13 is white water W dewatered in the paper making section 4 collected in the white water collect tank 20, and, in other words, the white water W dewatered and collected in the paper making section 4 is all fed back and used in the sections of the used paper recycling apparatus 1, specifically, the pulp making section 2, pulp concentration adjusting section 3, and cleaning system CS in water circulation system.

In the agitating device 12, the used paper UP, UP, ... supplied into the agitating tank 15 from the opening or inlet 6a of the apparatus case 6 is agitated for a specific time (3 to 5 minutes in the shown case) in water W supplied from the water feed unit 13 by normal and reverse rotation of the agitating impeller 16 by the drive motor 17, and macerated and mashed, and transformed into used paper pulp UPP.

The mashing unit 11 has at least one mashing machine, and one mashing machine 30 is shown in the illustrated preferred embodiment.

The mashing machine 30 pressurizes and mashes the used paper UP macerated in the macerating unit 10, and grinds and pulverizes the inks forming characters and patterns on the used paper UP.

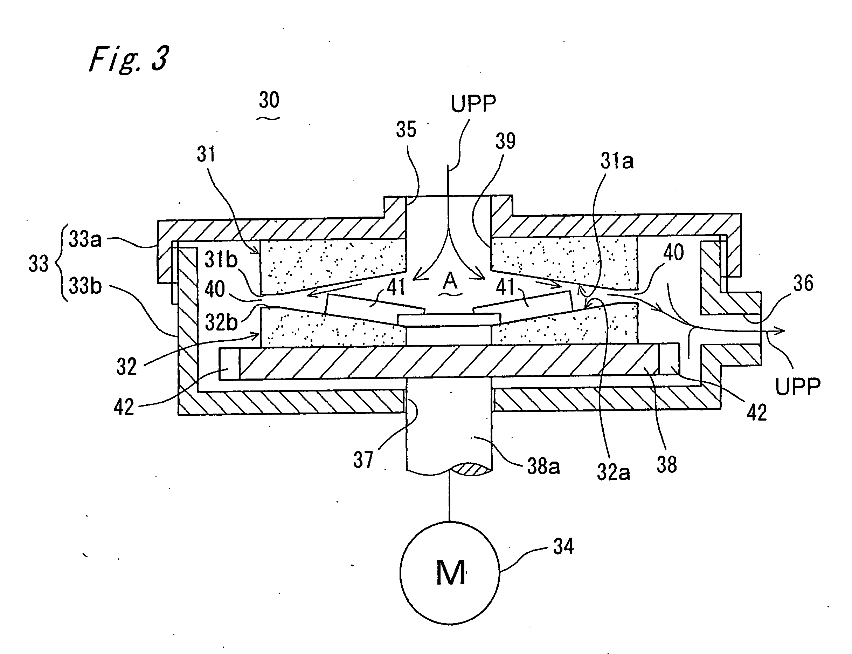

The mashing machine 30 is mainly composed of a plurality of (two in this case) relatively moving mashing members 31, 32 disposed oppositely across a tiny mashing clearance, and specifically includes a mashing tank 33 communicating with the agitating tank 15 of the macerating unit 10, the mashing members 31, 32 provided relatively movably in the mashing tank 33, and a drive source 34 for driving the mashing members 31, 32 relatively as shown in Fig. 3.

In the mashing machine 30, although not shown, the mashing members 31, 32 are relatively moving disks, and more specifically the upper mashing member 31 is fixed, and the lower mashing member 32 is rotatable as shown in Fig. 3.

The mashing tank 33 has an upper and lower divided structure so as to contain the pair of mashing members 31, 32 in a closed cylindrical shape, with the upper tank 33a and lower tank 33b mutually engaged. The mashing tank 33 has a feed port 35 opened in the center of the ceiling of the upper tank 33a, and a discharge port 36 opened in the cylindrical side of the lower tank 33b, and the feed port 35 and discharge port 36 are connected to communicate with the agitating tank 15 of the macerating tank 10 by way of piping not shown. Although not shown specifically, the feed port 35 communicates with the bottom position of the agitating tank 15, and the discharge port 36 communicates with the upper position of the agitating tank 15.

The upper fixed side mashing member 31 is fixed to the ceiling inner side of the upper tank 33a by proper fixing means, and the lower rotatable mashing member 32 is provided oppositely to the fixed side mashing member 31 concentrically across a tiny mashing clearance A.

The rotatable mashing member 32 provided integrally on a rotary bench 38, and a rotary support shaft 38a of the rotary bench 38 is opposite to the outside of the mashing tank 33 by way of the opening 37 in the bottom of the mashing tank 33, and is directly fixed to the rotary shaft 34a of the drive motor 34 as the rotary drive source in a direct motor structure. This drive motor 34 is specifically an electric motor, and the drive motor 34 is electrically connected to the control section 5.

The opposite sides 31a, 32a of both mashing members 31, 32 forming the tiny mashing clearance A cooperate and form mashing action surfaces. These opposite mashing action surfaces 31a, 32a are grindstone surfaces having multiple abrasive grains coupled by a binding material, and these two mashing action surfaces 31a, 32a are formed in a taper shape gradually increased in diameter toward the mutually opposite directions as shown in Fig. 3, and the mashing clearance A of conical shape is formed between them.

In the central position of mashing action surface 31a of the fixed side mashing member 31, an inlet 39 is formed to communicate concentrically with the feed port 35 of the mashing tank 33, and an annular clearance 40 formed between outer peripheral edges 31b, 32 b of mashing action surfaces 31a, 32a of the two mashing members 31, 32 is formed as an outlet communicating with the discharge port 36 of the mashing tank 33.

In this relation, a plurality of guide ribs 41, 41, ... are provided in the mashing action surface 32a of the rotary mashing member 32 at equal intervals in the circumferential direction, and a plurality of blades 42, 42, ... are provided on the outer circumference of the rotary bench 38 for supporting the rotary mashing member 32 at equal intervals in the circumferential direction.

By rotation of the rotary mashing member 32, the plurality of guide ribs 41, 41, ... act to guide the used paper pulp UPP flowing into the mashing clearance A from the inlet 39 into the outlet 40, and the plurality of blades 42, 42, ... act as pump for forcing out the used paper pulp UPP flowing in from the outlet 40 toward the discharge port 36 of the mashing tank 33 by centrifugal force.

The gap of the mashing clearance A is set at about 0.05 to 0.8 mm. The gap of the mashing clearance A can be finely adjusted by relatively rotating the upper tank 33a and lower tank 33b of the mashing tank 33, and moving back and forth the engaged portion. As the gap of the mashing clearance A is finely adjusted depending on the purpose, and high pressure and sliding force depending on the strength and driving force of the apparatus mechanical structure can be obtained in the cooperating action of the mashing action surfaces 31a, 32a. Also by adjusting the gap of the mashing clearance A, the mashing speed of the mashing unit 11 (mashing time) can be also adjusted properly.

In the state of the rotary mashing member 32 rotated and driven on the fixed mashing member 31 by the drive motor 34, the used paper pulp UPP supplied into the feed port 35 of the mashing tank 33 from the agitating tank 15 of the macerating unit 10 flows into the mashing clearance A from the inlet 40, passes through the mashing clearance A, receives the pressurizing and mashing action by the mashing action surfaces 31a, 32a rotating relatively, and returns to the agitating tank 15 from the outlet 40 by way of the discharge port 36 of the mashing tank 33 (see the flow path indicated by arrow in Fig. 3).

The feed port 35 and discharge port 36 of the mashing tank 33 are opened and closed by opening means. Specific structure of opening means is not shown, but any conventional manual or automatic opening valve may be used. The opening valve closes the feed port 35 and discharge port 36 when the operation of the mashing unit 11 is stopped, thereby preventing entry of used paper UP or used paper pulp UPP into the mashing tank 33 from the agitating tank 15 of the agitating device 12, and opens the feed port 35 and discharge port 36 when the operation of the mashing unit 11 is started, thereby allowing circulation of used paper UP or used paper pulp UPP between the agitating tank 15 and the mashing tank 33.

In this case, when the macerating unit 10 and mashing unit 11 are driven at the same time, the mashing tank 33 constitutes a pulp swirl tank for allowing circulation of used paper pulp UPP together with the agitating tank 15 of the macerating unit 10, and the used paper pulp UPP flowing and circulating through the circulation tanks 10, 23 receives the agitating and maceration action by the macerating unit 10, and the pressurizing and mashing action and ink grinding and pulverizing action by the mashing unit 11 sequentially and repeatedly. As a result, an appropriate paper strength is obtained for recycled paper RP to be made and regenerated in the paper making section 4 in a later process, and a recycled paper RP of high degree of whiteness is obtained (same effect as in de-inking process).

The used paper pulp UPP macerated and mashed completely by the macerating unit 10 and mashing unit 11 drops spontaneously by gravity from the agitating tank 15 and is stored in the concentration adjusting tank 26 disposed at its lower side.

The pulp concentration adjusting section 3 is provided at the downstream side of the agitating tank 15, and is designed for properly adjusting the concentration of used paper pulp UPP manufactured in the agitating tank 15. The pulp concentration adjusting section 3 includes a concentration adjusting tank 26 for storing the used paper pulp UPP manufactured in the agitating tank 15, and a concentration adjusting water feed unit for supplying water into the concentration adjusting tank 26, and the water feed unit 13 functions also as the concentration adjusting water feed unit.

The inner volume of the concentration adjusting tank 26 is determined depending on the number of sheets (weight) of used paper UP to be processed in batch in the agitating device 12. In the illustrated preferred embodiment, the concentration adjusting tank 26 is supposed to have a volume enough to adjust the concentration of used paper pulp UPP corresponding to the capacity of batch processing of about 8 sheets (about 32 g) of used paper UP of A4 format as stated above.

In this relation, a drain port 15b is provided in the bottom of the agitating tank 15 of the agitating device 12, and the drain port 15b is opened and closed by drain valve not shown in the drawing. The drain valve is specifically an electromagnetic valve, and is electrically connected to the drive section 5.

A specific concentration adjusting method of the pulp concentration adjusting section 3 is explained. In the concentration adjusting tank 26, water W is added from the concentration adjusting water feed unit 13 to the whole volume of used paper pulp UPP manufactured in batch process in the agitating tank 15, until the total volume of used paper pulp UPP and water W becomes a specified amount, and pulp suspension PS of specified concentration is prepared.

The target concentration of the pulp suspension PS to be adjusted is determined in consideration of paper making capacity of the paper making section 3 specified below, on the basis of the data of preliminary experiments, and it is set at concentration of about 0.1% in the shown example. Reference numeral 43 is a float switch provided in the concentration adjusting tank 26, and it detects the water level when the amount of pulp suspension PS in the concentration adjusting tank 26 (total volume of used paper pulp UPP and water W) becomes the specified amount.

Therefore, in the concentration adjusting tank 26, the whole volume of used paper pulp UPP manufactured in the agitating tank 15 (and mashing tank 33) is dropped and supplied by gravity into the concentration adjusting tank 26 from the drain port 15b of the agitating tank 15, and white water W is added to the used paper pulp UPP from the concentration adjusting water feed unit 13 up to the specified value (detected by the float switch 43), and the concentration of the used paper pulp UPP is adjusted, and pulp suspension PS of specified concentration is obtained.

In the illustrated preferred embodiment, in the whole volume of used paper pulp UPP (about 32 g of used paper UP + 1.5 liters of water W), water W for dilution is added from the concentration adjusting feed unit 13, and it is controlled so that the total volume (total weight) of used paper pulp UPP and water W may be 32 liters, and pulp suspension of concentration of about 0.1% (target concentration) is prepared. This pulp suspension PS of adjusted concentration is sent into pulp feed tank 85 of paper making section 3 in next process by means of first suspension feed pump 44.

The paper making section 4 is a process unit for manufacturing recycled paper RP from the used paper pulp UPP manufactured in the mashing unit 10 (specifically the pulp suspension PS of which concentration is adjusted the pulp concentration adjusting section 3), and includes a paper making process unit 50, a dewatering roll unit 51, and a drying process unit 52.

The paper making process unit 50 is a location for manufacturing wet paper from slurry pulp suspension PS of water W and used paper pulp UPP sent from the mashing unit 10 of the pulp making section 2, and includes a paper making conveyor 55 and a pulp feed unit 56.

The paper making conveyor 55 is for conveying the pulp suspension while processing, and specifically includes a mesh belt 60 of paper making mesh structure composed of numerous mesh cells for filtering and dewatering the pulp suspension PS, running straightly toward its running direction.

Specifically, the paper making conveyor 55 includes the mesh belt 60 in an endless belt form for processing and conveying the pulp suspension PS, and a drive motor 61 for driving the mesh belt 60.

The mesh belt 60 is an endless belt of plate members of paper making mesh structure of specified width connected in a ring form of specified length.

Plate members of paper making mesh structure for composing the mesh belt 60 are made of materials capable of filtering and dewatering the pulp suspension PS appropriately through innumerable mesh cells of paper making mesh structure, and a heat-resistant PET-made mesh belt 60 is used in the illustrated preferred embodiment.

The paper making mesh structure of the mesh belt 60 is preferably a fine woven structure or fine and flat woven structure, and is specifically selected depending on the properties of the paper to be processed.

The width dimension of the mesh belt 60 is set slightly larger than the width dimension of the recycled paper RP to be manufactured from the pulp suspension PS.

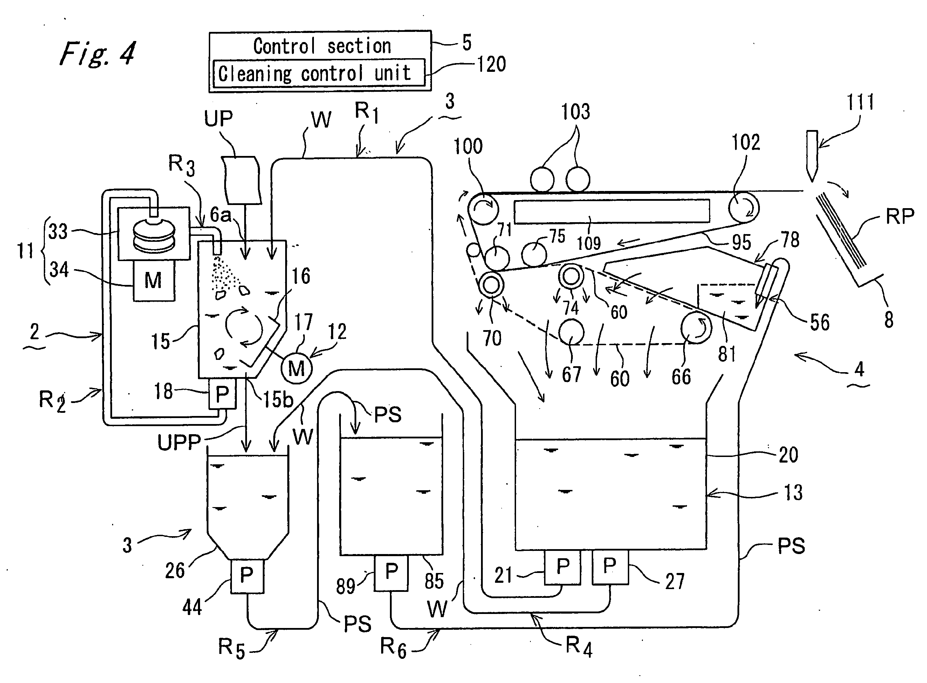

The mesh belt 60 is rotatably suspended and supported, as shown in Fig. 1 and Fig. 4, by way of drive roller 65, follower roller 66, support roller 67, dewatering roll 70, and preliminary dewatering roll 74, and is driven by and coupled to the drive motor 61 through the drive roller 65.

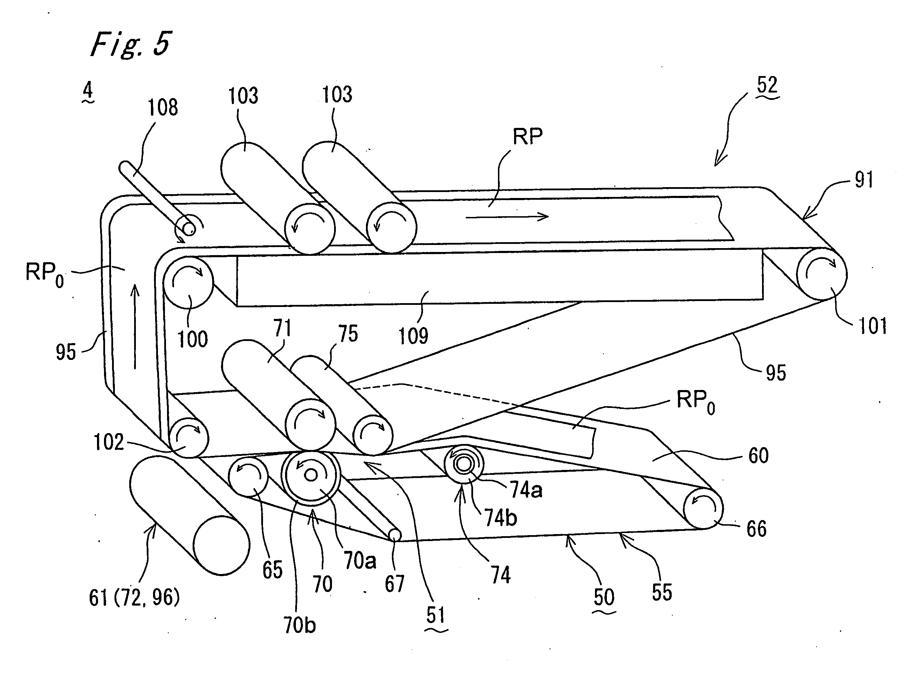

The mesh belt 60 is, as shown in Fig. 1 and Fig. 5, disposed so as to run obliquely upward and straightly toward its running direction, and is designed to extend the length of paper making process appropriately in a limited space of installation, and to increase the filtering and dewatering rate in relation to the paper making mesh structure of the mesh belt 60. The upward inclination angle α of the mesh belt is determined depending on the purpose, preferably about 3 to 12 degrees, and is set at 6 degrees in the illustrated preferred embodiment.

The drive motor 61 for driving the mesh belt 60 is specifically an electric motor, and is connected electrically to the control section 5. The drive motor 61 is also used as drive source of dewatering roll unit 51 and drying process unit 52 described below, and the structure for common use or the drive coupling mechanism is mentioned below.

The pulp feed unit 56 is a location for supplying pulp suspension PS from the mashing unit 10 of the pulp making section 2 onto the mesh belt 60, and specifically the pulp feed unit 56 supplies and spreads the pulp suspension PS uniformly on the upper surface of the mesh belt 60. The paper making process unit 50 is located at the start end of paper making process of the paper making conveyor 55.

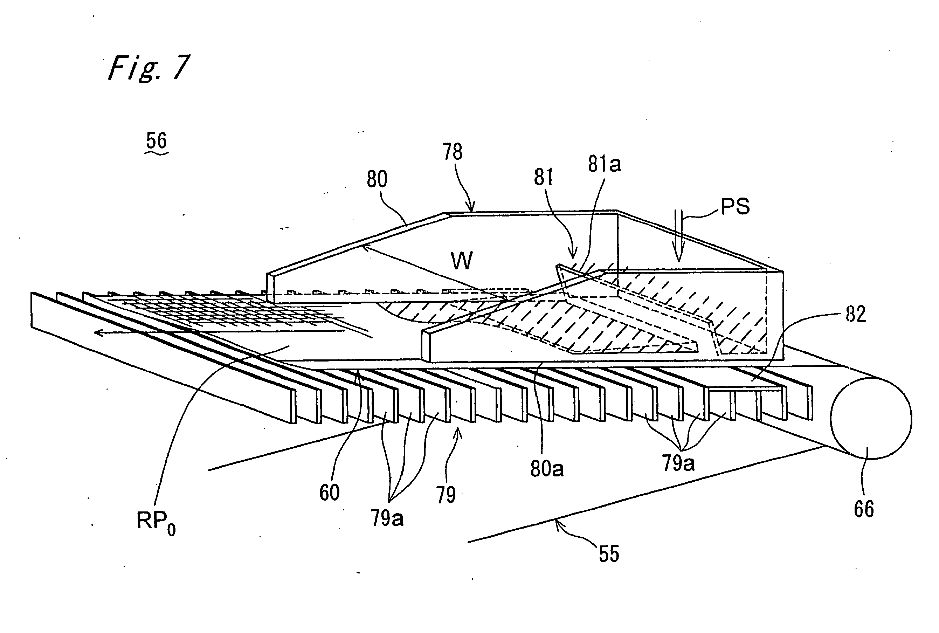

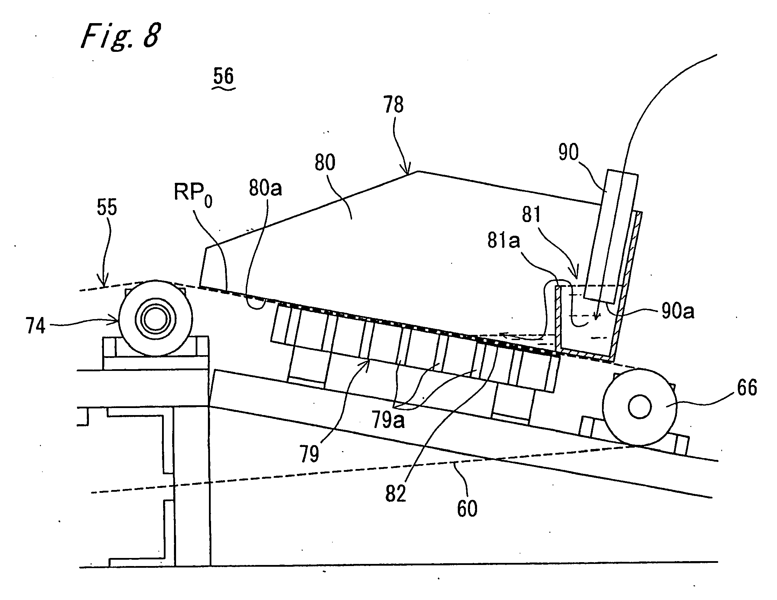

A specific structure of the pulp feed unit 56 is shown in Fig. 7 and Fig. 8. In this pulp feed unit 56, the mesh belt 60 is disposed in an upward slope toward the running direction, and a paper making frame 78 and a partition member 79 are disposed respectively at upper and lower side positions of the mesh belt 60.

The paper making frame 78 is slidably disposed on the upside of the mesh belt 60, and, as shown in Fig. 7 and Fig. 8, includes a main body frame 80 of U shape plane opened at the leading end, that is, the running direction end of the mesh belt 60, and an overflow tank 81 provided at the rear end of the main body frame 80.

The main body frame 80 is disposed so that its lower end 80a may slide on the upside of the mesh belt 60 running obliquely, and the frame inner width W (see Fig. 7) of main body fame 80 is set in a width dimension of recycled paper PR to be manufactured.

The overflow tank 81 is integrally fixed to the rear end of the main body frame 80, and its front wall upper edge 81a is the overflow portion formed horizontally and straightly, and a feed opening 90a of the suspension feed piping 90 for supplying pulp suspension PS of pulp feed tank 85 is provided oppositely in the overflow tank 81.

The pulp suspension PS is supplied and stored in the overflow tank 81 from the suspension feed piping 90, and when the overflow tank 81 is fully filled with pulp suspension PS, and pulp suspension PS is further supplied, it overflows from the overflow unit 81a of the overflow tank 81 as indicated by arrow in Fig. 8, and flows down into the flat member 82 of the partition member 79 described below.

The partition member 79 is disposed slidably at the downside of the mesh belt 60, and has a draining louver structure composed of a plurality of framework members 79a, 79a, ... as shown in Fig. 7 and Fig. 8, having a shape and size capable of slidably supporting the entire width of the downside of the mesh belt 60, and the base end position of the louver structure is closed by the flat member 82.

The flat member 82 is provided at a position corresponding to the overflow tank 81 of the paper making frame 78, and is disposed, specifically as shown in Fig. 8, at a position corresponding to the flow-down position of the pulp suspension PS overflowing from the overflow tank 81, and thereby the mesh cells of the flow-down supply position of the pulp suspension PS in the mesh belt 60 are supported in closed state by the flat member 82.

At the upstream side of the pulp feed unit 56, a pulp feed tank 85 is provided for supplying the pulp suspension PS into the pulp feed unit 56.

The pulp suspension PS stored in the pulp feed tank 85 is detected by lower limit water level float switch 87 and upper limit water level float switch 88, and is supplied continuously into the overflow tank 81 of the pulp feed unit 56 by second suspension feed pump 89.

The pulp suspension PS stored in the pulp feed tank 85 is thus supplied into the overflow tank 81 of the pulp feed unit 56 by the second suspension feed pump 89, and the pulp suspension PS supplied in the overflow tank 81 overflows from the overflow tank 81 as shown in Fig. 8, and flows down onto the flat member 82.

The pulp suspension PS is uniformly diffused on the upside of the mesh belt 60 by cooperative stagnant action by the main body frame 80 and partition member 79 of the paper making frame 78, and is conveyed together with the mesh belt 60 while maintaining the dimension specified by the main body frame 80 by the running action of mesh belt 60 in the arrow direction, and is dewatered by the gravitational filtering action of the mesh cells of the mesh belt 60, and wet paper RP₀ is prepared. The filtered and dewatered white water W (pulp water of ultralow concentration filtered by the paper making net in the paper making process) is collected in the white water collect tank 20 of the water feed unit 13 as described above.

The dewatering roll unit 51 is a location of squeezing and dewatering the wet paper RP₀ on the mesh belt 60 at the junction of the paper making process unit 50 and the drying process unit 52 described below.

Specifically, the smooth surface belt 95 of the drying process unit 52 at the downstream side and the mesh belt 60 of the paper making process unit 50 at the upstream side are disposed in upper and lower layers as shown in Fig. 1 and Fig. 5, and the upper and lower adjacent portions of the smooth surface belt 95 and mesh belt 60 form the junction, and the dewatering roll unit 51 rolls and squeezes the mesh belt 60 and smooth surface belt 95 from upper and lower sides.

The dewatering roll unit 51, dewatering roll 70, press roll 71, and drive motor 72 are principal components, and preliminary dewatering roll 74 and slurry preventive roll 75 are auxiliary components.

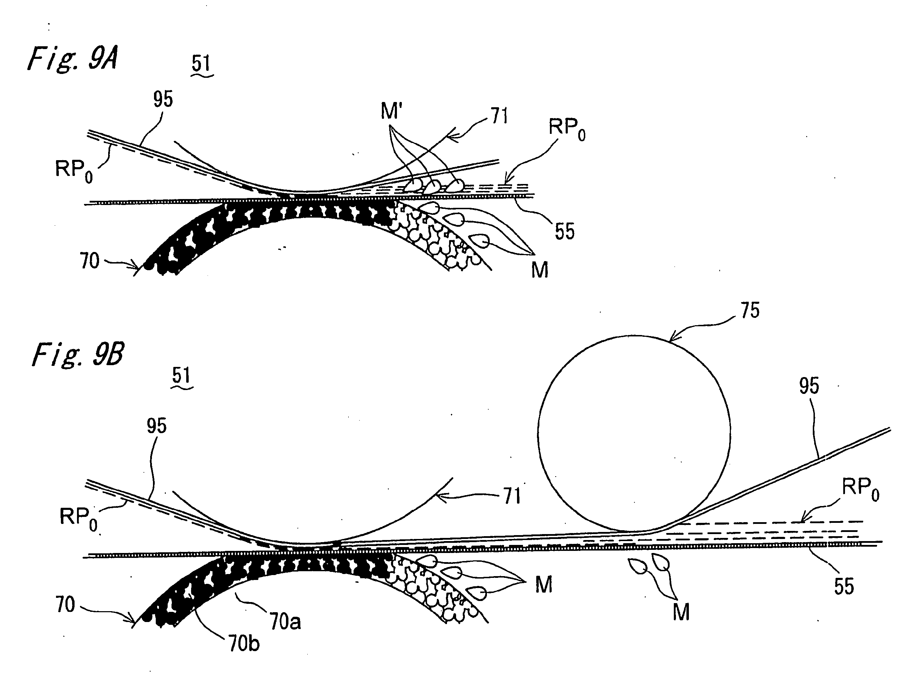

The dewatering roll 70 rolls on the mesh belt 60 from the lower side, and is specifically composed, as shown in Fig. 9A and Fig. 9B, of a cylindrical roll 70a of high rigidity material, and a dewatering layer 70b of porous material of fine continuous pores wound on the outer circumference thereof. The dewatering layer 70b is made of material excellent in hydrophilic property, water absorption and water retaining property, and is preferably a porous material of fine continuous pores excellent in flexibility.

The dewatering roll 70 in the illustrated preferred embodiment is a single layer structure, that is, a cylindrical dewatering layer 70b of fine porous continuous foamed material having micron-size ultrafine continuous pores is fitted to the cylindrical outer circumference of the stainless steel cylindrical roll 70a.

The press roll 71 is to roll and press the upside of the smooth surface belt 95 of the drying process unit 52 described below. Specifically, it is a cylindrical roll of high rigidity material. The press roll 71 in the illustrated preferred embodiment is a stainless steel cylindrical roll.

The dewatering roll 70 and press roll 71 are specifically driven by and coupled to a single drive motor 72, and the both rolls 70, 71 are rotated and driven in interlock. In this case, the both rolls 70, 71 are rotated and controlled so that the outer circumferences of the both rolls 70, 71 may mutually roll and contact with a slight difference in rotating speed, on the contact surfaces of the mesh belt 60 and smooth surface belt 95 (the downside of mesh belt 60 and upside of smooth surface belt 95) rolling and squeezing in pressed state between the outer circumferences.

More specifically, the rotating speed of the press roll 71 is set slightly higher than the rotating speed of the dewatering roll 70, and hence the running speed of the smooth surface belt 95 is set higher than the running speed of the mesh belt 60. In such configuration, as mentioned below, when the wet paper RP₀ squeezed and dewatered by the dewatering roll unit 51 is rolled and transferred from the upside of the mesh belt 60 of the lower side to the downside of the smooth surface belt 95 of the upper side, tension is applied to the wet paper RP₀, and creasing of wet paper RP₀ is effectively prevented.

The drive motor 72 is, in the illustrated preferred embodiment, used commonly with the drive motor 61 of the paper making process unit 50 as described below.

By driving of drive motor 72, the both rolls 70, 71 roll and squeeze the both belts 60, 95 from upper and lower side in pressed state, and moisture M contained in the wet paper RP₀ on the mesh belt 60 is absorbed and dewatered by the dewatering roll 70 through the mesh belt 60. The squeezed and dewatered white water W is collected in the white water collect tank 20 of the water feed device 13.

A specific mechanism of squeezing and dewatering is explained by referring to Fig. 9A. By rotation of both rolls 70, 71, the mesh belt 60 and smooth surface belt 95 having the wet paper RP₀ mounted on the upside are guided in between the rolls 70, 71 with the wet paper RP₀ interposed thereon, and rolled and squeeze from upper and lower sides in pressed state. As a result, the moisture M contained in the wet paper RP₀ is squeezed out to the upstream side of the both rolls 70, 71 (the right side in the drawing), but since the smooth surface belt 95 of the upper side has a smooth surface not having pores, and the squeezed moisture M entirely passes through fine continuous pores in the mesh belt 60 at the lower side, and is absorbed in the dewatering layer 70b of the dewatering roll 70.

The preliminary dewatering roll 74 and slurry preventive roll 75 are provided to assist the squeezing and dewatering action of the press roll 71 and dewatering roll 70 in the dewatering roll unit 51.

The preliminary dewatering roll 74 is disposed, as shown in Fig. 1, so as to apply tension to the mesh belt 60 by rolling from the lower side at the upstream side of the dewatering roll unit 51.

The preliminary dewatering roll 74 is similar to the dewatering roll 70 in its specific structure, and is composed of a cylindrical roll 74a of high rigidity material, and a dewatering layer 74b of porous material of fine continuous pores wound on the outer circumference thereof. The preliminary dewatering roll 74 in the illustrated preferred embodiment is a single layer structure, that is, a cylindrical dewatering layer 74b of fine porous continuous foamed material having micron-size, ultrafine continuous pores is fitted to the cylindrical outer circumference of the stainless steel cylindrical roll 74a.

The wet paper RP₀ uniformly diffused on the upside of the mesh belt 60 and conveyed together with the mesh belt 60 is filtered and dewatered by the mesh belt 60, and is also absorbed and dewatered by the preliminary dewatering roll 74, and the squeezing and dewatering action of the press roll 71 and dewatering roll 70 is assisted preliminarily.

The slurry preventive roll 75 is disposed, as shown in Fig. 1 and Fig. 9B, so as to press the smooth surface belt 95 to the wet paper RP₀ on the mesh belt 60 at the lower side, by rolling and pressing the smooth surface belt 95 from the upper side, near the upstream side of the dewatering roll unit 51.

Referring now to Fig. 9B, when the mesh belt 60 and smooth surface belt 95 having the wet paper RP₀ mounted on the upside are rolled and squeezed from upper and lower side in pressed state by the dewatering roll 70 and press roll 71, the moisture M contained in the wet paper RP₀ is squeezed out to the upstream side (right side in the drawing) of the both rolls 70, 71, and at the same time the moisture M held as a result of previous squeezing and dewatering of the dewatering roll 70 is also squeezed out.

In this case, if the slurry preventive roll 75 is not provided, as shown in Fig. 9A, near the upstream side of the both rolls 7.0, 71, the intersecting angle of the smooth surface belt 95 at the upper side and the mesh belt 60 at the lower side (the angle enclosed as intersection of pressing points of both rolls 70, 71 by the both belts 60, 95) is relatively large, and hence the smooth surface belt 95 at the upper side is departed from the wet paper RP₀ on the mesh belt 60 at the lower side. Hence, part M' of the total moisture M of the moisture contained in the wet paper RP₀ squeezed to the upstream side of the both rolls 70, 71 and moisture held in the dewatering roll 70 is not absorbed by the dewatering roll 70 through the mesh belt 60, but may be absorbed in the wet paper RP₀, and the wet paper RP₀ may return to the state of slurry.

If the intersecting angle of the smooth surface belt 95 at the upper side and the mesh belt 60 at the lower side is not so large, such problem does not occur, and installation of slurry preventive roll 75 may be omitted.

The wet paper RP₀ squeezed and dewatered by the dewatering roll unit 51 is rolled and transferred on the downside of the smooth surface belt 95 at the upper side from the upside of the mesh belt 60 at the lower side, and is conveyed together with the smooth surface belt 95, and dried by the drying process unit 52.

This transfer action is considered to occur from the smooth surface structure of the smooth surface belt 95. This transfer action is considered to occur from the smooth surface structure of the smooth surface belt 95. That is, the surface of the smooth surface belt 95 at the upper side is a smooth surface not having pores, while the surface of the lower side mesh belt 60 is a rough surface having numerous continuous fine pores, and as a result, the wet paper RP₀ slightly containing moisture is estimated to be attracted by the surface tension on the surface of the smooth surface belt 95.

As mentioned above, the running speed of the smooth surface belt 95 is set higher than the running speed of the mesh belt 60, and when the wet paper RP₀ squeezed and dewatered by the dewatering roll unit 51 is transferred and rolled on the downside of the smooth surface belt 95 at the upper side from the upside of the mesh belt 60 at the lower side, since a tension is applied to the wet paper RP₀ by the difference in speed, the wet paper RP₀ is not creased, but is smoothly transferred onto the smooth surface belt 95.

The drying process unit 52 is a location for obtaining recycled paper RP by drying the wet paper RP₀ squeezed and dewatered by the dewatering roll unit 51 after being manufactured in the paper making process unit 50, and is mainly composed of a drying conveyor 91 and a heating and drying unit 92.

The drying conveyor 91 conveys the wet paper RP₀ smoothly after being squeezed and dewatered by the dewatering roll unit 51, and includes the smooth surface belt 95, and a drive motor 96 for driving the smooth surface belt 95.

The smooth surface belt 95 is for conveying the wet paper RP₀ while heating and drying, and is specifically an endless belt of plate member of smooth surface structure having a specified width formed continuously in a ring in specified length.

The specified width is set slightly larger than the width of the recycled paper RP to be manufactured same as in the mesh belt 60. The plate material of the smooth surface structure can be finished to an appropriate smooth surface on one side of the wet paper RP₀, so as to withstand heating action by the heating and drying unit 97 described below, and is preferably made of elastic heat resistant material, and a fluoroplastic belt is used in the shown preferred embodiment.

The smooth surface belt 95 is rotatably suspended and supported by way of drive roller 100, follower rollers 101, 102, press roll 71, slurry preventive roll 75, smooth surface finishing rolls 103, 103, and preliminary dewatering roll 74 as shown in Fig. 1 and Fig. 5, and is driven by and coupled to the drive motor 96 by way of the drive roller 100.

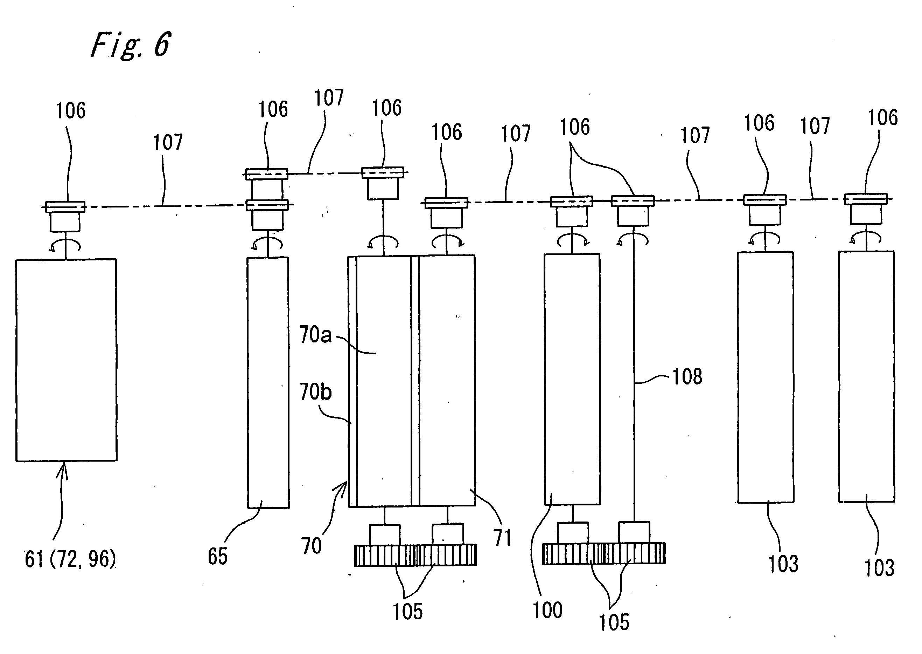

The drive motor 96 for driving the smooth surface endless belt 95 is commonly used as the driving source of the paper making net conveyor 40 and dewatering roll unit 41 as mentioned above, and this common structure or drive coupling mechanism is shown in Fig. 6.

In Fig. 6, reference numeral 105 is a power transmission gear, numeral 106 is a sprocket, numeral 107 is a power transmission chain applied between the sprockets 106, 106, and numeral 108 is a power transmission shaft.

The gear ratio of power transmission gears 105, 105, ... and sprockets 106, 106, ... is determined so that all of the drive roller 100, follower rollers 101,102, press roll 71, slurry preventive roll 75, smooth surface finishing rolls 103, 103, and preliminary dewatering roll 74 may roll and contact on the smooth surface belt 95 substantially at an identical peripheral speed because the drive source is a single drive motor 96.

The heating and drying unit 92 is a location for heating and drying the wet paper RP₀ on the smooth surface belt 95, and includes a heater plate 109 disposed somewhere in the running route of the smooth endless belt 95 as a heating unit.

The heater plate 109 in the shown preferred embodiment is provided in the horizontal running portion in the running route of the smooth surface belt 95, and more specifically provided in contact with the opposite side of the upside of the holding side of the wet paper RP₀, that is, on the downside, on the smooth surface belt 95. Hence, the wet paper RP₀ on the smooth surface belt 95 is heated and dried indirectly by the smooth surface belt 95 heated by the heater plate 109.

In the running route of the smooth surface belt 95, the two smooth surface finishing rolls 103, 103 are disposed. Specifically, these smooth surface finishing rolls 103, 103 are disposed parallel opposite to the heater plate 109 in the running portion in the running route of the smooth belt 95.

The both smooth surface finishing rolls 103, 103 sequentially roll and press the wet paper RP₀ on the smooth surface belt 95, and finish the one side and opposite side of the wet paper RP₀ contacting with the surface of the smooth surface belt 95 to a proper smooth surface.

At the downstream side of the heating and drying unit 92 of the smooth surface belt 95, a stripping member 110 is provided. Specifically, the striping member 110 is a heat resistant elastic spatula, and the stripping member 110 of the illustrated preferred embodiment is made of an elastically deformable stainless steel plate of about 0.1 to 3 mm in thickness coated with Teflon (registered trademark) on the outer circumference, and its base end is supported at the fixed side (not shown), and its leading end edge 110a elastically abuts and stops on the surface of the smooth surface belt 95.

The paper dried and conveyed on the smooth surface belt 95, that is, the recycled paper RP is sequentially separated from the holding side of the smooth surface belt 95 by the leading end edge 110a of the stripping member 110.

In this relation, at the downstream side of the stripping member 110, that is, at the terminal end position of running route of the smooth surface belt 95 or the terminal end position of the drying process unit 52, a size cutter 111 is provided for cutting the recycled paper RP separated from the smooth surface belt 95 to a specified size and shape (only the length is shown in the drawing). The size cutter 111 is not particularly shown in the drawing, but may be realized by known structure, such as double-side slitter, or guillotine cutter by solenoid.

The recycled paper RP separated from the smooth surface belt 95 is cut to a specified length by the size cutter 111 (vertical size of A4 format in the shown preferred embodiment), and the recycle paper RP of proper size is obtained, and discharged from the discharge port 6b of the apparatus case 6. Cutting in specified length is realized by measuring the belt feed rate of the smooth surface belt 95 by proximity switch, encoder and other sensors.

The cleaning system CS is designed to clean the apparatus sections, that is, the pulp making section 2 and pulp concentration adjusting section 3.

The cleaning system CS operates in water circulation system in which the water dewatered and collected in the paper making section 4, that is, the white water W is fed back and used at least in the pulp making section 2 and pulp concentration adjusting section 3, and these sections 2, 3 are cleaned in this water circulation system.

The cleaning system CS includes, as shown in Fig. 4, the cleaning water feed source, that is, the water feed unit 13, cleaning water circulation routes R₁ to R₆, circulation pumps 21, 18, 27, 44, 89, and cleaning control unit 120.

The water feed source of the water feed unit 13 is, as mentioned above, white water W dewatered in the paper making section 3 collected in the white water collect tank 20, and the white water W dewatered ad collected in the paper making section 3 is entirely fed back and utilized in the agitating device 12 of the macerating unit 10 and the pulp concentration adjusting section 3 in water circulation system.

The cleaning water circulation routes R₁ to R₆ are formed to circulate water from the water feed unit 13, pass through the pulp making section 2 and pulp concentration adjusting section 3, and return to the water feed unit 13, and is specifically composed of the route R₁ from the white water collect tank 20 to the agitating tank 15, the route R₂ from the agitating tank 15 to the mashing tank 33, the route R₃ from the mashing tank 33 to the agitating tank 15, the route R₄ from the white water collect tank 20 to the concentration adjusting tank 26, the route R₅ from the concentration adjusting tank 26 to the pulp feed tank 85, and the route R₆ from the pulp feed tank 85 to the pulp feed unit 56.

The circulation pumps 21, 18, 27, 44, 89 circulate the cleaning water W through the cleaning water circulation routes R₁ to R₆, and specifically the feed pumps provided in the tanks 20, 15, 26, 85 circulate the cleaning water W in the cleaning water circulation routes R₁ to R₆.

The cleaning control unit 120 interlocks and controls the water feed pumps 21, 27 of the water feed unit 13 and the circulation pumps 18, 44, 89, and specifically forms a part of the control section 5, in order to excutes the following cleaning processes (1) to (5), and interlocks and controls the water feed pumps 21, 27 and the circulation pumps 18, 44, 89, and in this cleaning process, in interlock with driving of these pumps 21, 18, 27, 44, 89, the sections to be cleaned, that is, the pulp making section 2, pulp concentration adjusting section 3, and paper making section 4 are driven and controlled.

When a cleaning operation switch provided aside from the normal operation switch not shown (that is, the used paper recycling operation switch) is turned on, the cleaning control section 120 executes the following cleaning processes (1) to (5), and the white water W dewatered and collected in the paper making section 4 is used as cleaning water, and is circulated to the pulp making section 2 and pulp concentration adjusting section 3, and the pulp making section 2 and pulp concentration adjusting section 3 are cleaned.
(1) The white water W dewatered and collected in the white water collect tank 20 is supplied by the water feed pump 21 into the agitating tank 15 of the pulp making section 2 by way of the route R₁, and is further poured into the mashing tank 33 through the route R₂ by the feed pump 18.
   In interlock, the agitating device 12 of the agitating tank 15 and the mashing members 31, 32 of the mashing tank 33 are relatively rotated and driven, and the cleaning water W circulates from the agitating tank 15, mashing tank 33, route R₃, and back to agitating tank 15, and these tanks 15, 33 are cleaned.
(2) After cleaning of the tanks 15, 33, the whole volume of cleaning water W in the agitating tank 15 falls into the concentration adjusting tank 26. In the concentration adjusting tank 26, separately, the cleaning water W is directly supplied by the concentration adjusting water feed pump 27 from the white water collect tank 20 through the route R₄. The inside of the concentration adjusting tank 26 is cleaned by these supplies of cleaning water W.
(3) After cleaning of the concentration adjusting tank 26, the cleaning water W is supplied into the pulp feed tank 85 through the route R₅ from the first suspension feed pump 44, and the inside of the pulp feed tank 85 is cleaned.
(4) After cleaning of the pulp feed tank 85, the used cleaning water W collected in the pulp feed tank 85 is supplied into the pulp feed unit 56 of the paper making section 4 through the route R₆ by the second suspension feed pump 89, and is supplied into the paper making process by the mesh belt 60, ad the used paper pulp UPP contained in the cleaning water W is removed (clarified) as recycled paper RP (wet paper RP₀), and is collected again in the white water collect tank 20.
   The used cleaning water W collected in the pulp feed tank 85 is unknown in pulp concentration (generally lower concentration than the pulp concentration obtained in normal operation), and since it is a pulp containing traces of sludge if the concentration is low, and is collected as recycled paper RP because paper can be manufactured by low-speed operation of the mesh belt 60.
   In this case, the cleaning water W is also a pulp containing traces of sludge, and if attempted to clean the mesh belt 60 by this cleaning water W, the net may be contaminated, and hence the mesh belt 60 is stopped during the cleaning process.
   When the used cleaning water W in the pulp feed tank 85 is spent up, one cycle of the cleaning process is terminated.
(5) The cycle of processes (1) to (4) is repeated plural times.

The circulation cleaning by the cleaning system CS consisting of processes (1) to (5) is executed, in this preferred embodiment, every time after end of the used paper recycling operation (normal operation of pulp making section 2, pulp concentration adjusting section 3, and paper making section 4).

Aside from manual operation by independent operation switches for normal operation and cleaning operation as explained in the preferred embodiment, these operations may be changed over automatically, and, for example, the circulation cleaning by white water W dewatered and collected in the paper making section 4 may be started automatically upon end of the day's used paper recycling operation of used paper recycling apparatus 1, and in this case it is particularly preferred to execute the cleaning operation by the cleaning system CS automatically in the nighttime.

The control section 5 automatically controls the operation of driving parts of the macerating unit 10 and paper making section 4 by cooperating mutually, and is composed of a microcomputer specifically including CPU, ROM, RAM, and I/O ports.

The control section 5 includes the cleaning control unit 120 for this cleaning system CS, and also stores programs for continuously executing the pulp manufacturing process of the pulp making section 2 and the paper making process of the paper making section 4, and also stores preliminarily various data including the driving time of agitating device 12 in the macerating unit 10, operation timing of water feed unit 13, running speed of mesh belt 60 and smooth surface belt 95 in the paper making section 4, driving time of heating and drying unit 97, and operation timing of size cutter 111, through keyboard or selective input setting.

Various devices are electrically connected to the control section 5 as mentioned above, such as float switches 28, 29, 43, 87, 88, and drive units 17, 21, 27, 44, 61 (72, 96), 89, 105, 111, and the control section 5 controls these drive units 17, 21, 27, 44, 61 (72, 96), 89, 105, 111, according to the measured values and data.

The used paper recycling apparatus 1 having such configuration is started by turning on the power, and the control section 5 automatically controls these drive units in mutual relation, and executes the following processes. Consequently, the used paper UP, UP,... put into the inlet 6a of the apparatus case 6 is macerated and mashed in the pulp making section 2, macerating unit 10, and mashing unit 11, and used paper pulp UPP is manufactured, and the used paper pulp UP is further processed in the paper making process unit 50 of the paper making section 4, the watering roll unit 51, and the drying process unit 52, and recycled paper RP is obtained, which is discharged into the recycled paper receive tray 8 from the outlet 6b of the apparatus case 6.

As mentioned above, circulation cleaning by the cleaning system CS is executed at specified timing and interval.

In the used paper recycling apparatus 1 having such configuration, the cleaning system CS circulates the white water W dewatered and collected in the paper making section 4 in the pulp making section 2 and pulp concentration adjusting section 3 as cleaning water, and the pulp making section 2 and pulp concentration adjusting section 3 are cleaned, and therefore the used paper pulp UPP remaining in the parts of the apparatus sections can be effective cleaned and removed, thereby avoiding troubles due to drying of the remaining used paper pulp UPP to cause sticking of valves or malfunction of pumps, and occurrence of error in concentration adjustment due to remaining used paper pulp UPP may be prevented.

In the used paper recycling apparatus 1 having such cleaning system CS, the following outstanding effects are obtained, and the used paper recycling apparatus 1 can be installed not only in a large office, but also in a small shop or a room in general household, is friendly to the environment and low in running cost, capable of preventing leak of confidential information, private information, and other information, and keeping a high confidentiality.
(1) In the apparatus case 6 of furniture size, the apparatus includes the pulp making section 2 for manufacturing used paper pulp UPP by macerating and mashing used paper UP, and the paper making section 4 for manufacturing recycled paper RP by making the used paper pulp UPP manufactured in the pulp making section 2, and the used paper recycling apparatus of small and simple structure is realized, and therefore the used paper UP can be recycled at the site of origin without being discarded, and disposal of used paper UP is decreased, and not only the refuse problems can be solved, but also the limited resources can be utilized effectively.
   In particular, from confidential problems, recycling of private and confidential used paper UP is not promoted, and by recycling the used paper UP at the site of origin, the resources can be utilized effectively.
(2) At the site of origin of used paper UP, a compact used paper recycling system having a same function as large scale system installed in paper making plant or used paper recycling plant is installed, and used paper UP can be recycled continuously in a closed circuit in a small shop or general household, and refuse collection and transportation expenses and incineration and other costs are saved, and it is very economical.
(3) The apparatus structure is compact, and it can be installed not only in large office, but also in small shop or general household, and from this point of view, too, leak of confidential information and private information can be securely prevented.
(4) Being installed at the site of origin of used paper UP, the pulp making section 2 macerates the used paper UP into used paper pulp UPP, and the paper making section 4 manufactures the used paper pulp UPP into recycled paper RP, and information of characters and patterns printed on the paper is not diffused outside of the site of origin of used paper UP, and leak of confidential information and private information can be prevented securely, and a high confidentiality is held and the resources can be utilized effectively.

That is, by using the used paper recycling apparatus 1 of the preferred embodiment, it is free from risk of external diffusion of various information from the closed system of its used (for example, school, hospital, city office, law firm, patent office, general household).

In other words, in the case of a conventional shredder, if the used paper is shredded into small chips, and the printed characters and patterns are not legible, the shredded chips are incinerated, and external diffusion cannot be prevented perfectly. In this regard, the waste chips may be stored within an internal warehouse, but storing place is needed, and the resources are used only once and are not utilized effectively.

By contrast, according to the used paper recycling apparatus 1 of the preferred embodiment, the information printed on the used paper is not diffused outside of the closed system, and the resources can be utilized effectively.

### Preferred Embodiment 2

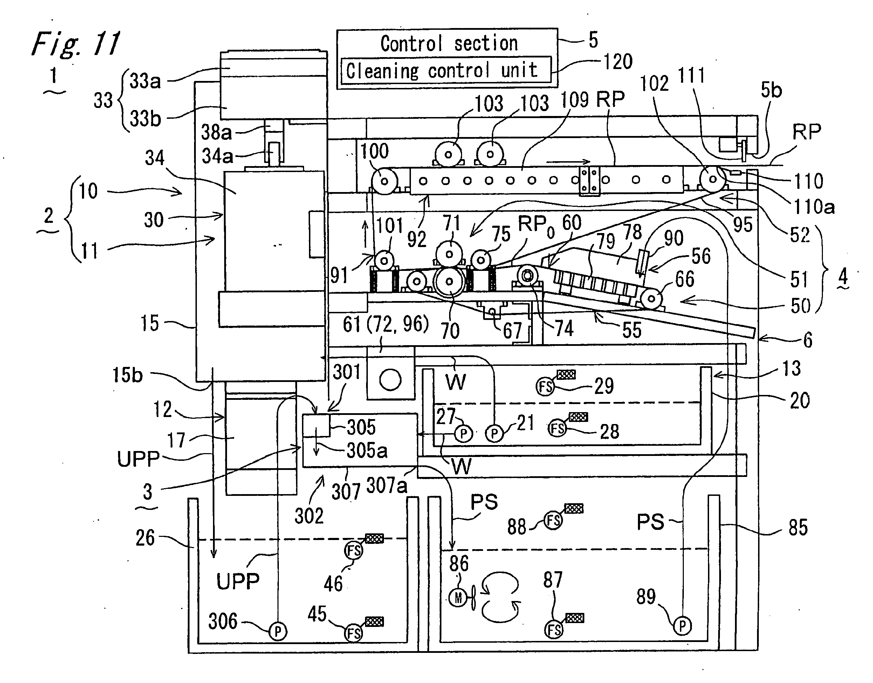

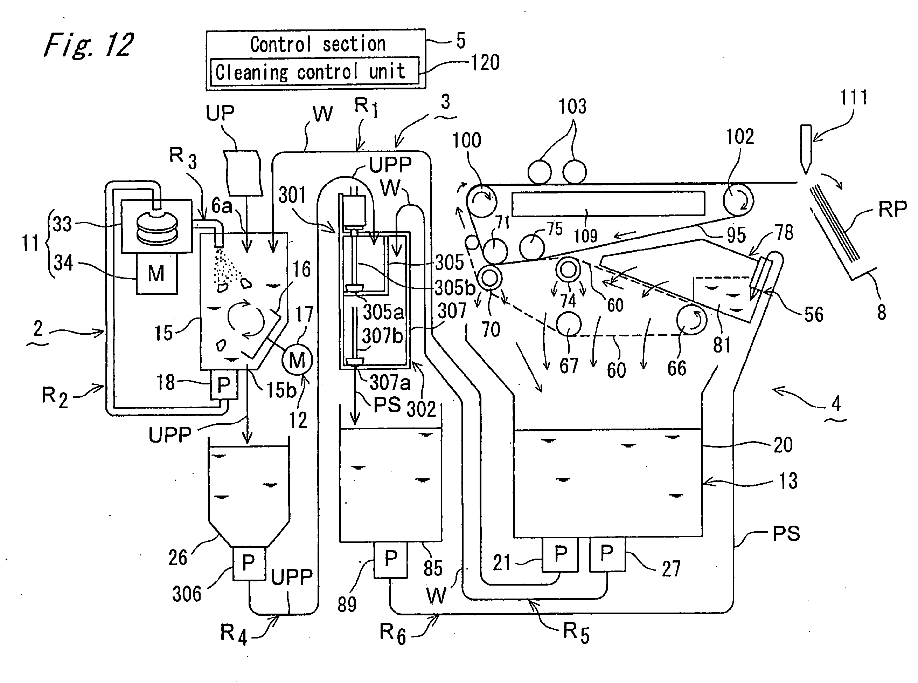

This preferred embodiment is shown in Fig. 11 and Fig. 12, and is similar to preferred embodiment 1, except that the structure of concentration adjusting section 3 is modified, and that the cleaning system CS is slightly modified in its relation.

That is, in the used paper recycling apparatus 1 of the preferred embodiment, mainly the structure of the pulp concentration adjusting section 3 is modified, and the water consumption is saved, and the entire structure of the used paper recycling apparatus 1 is more compact.

The concentration adjusting section 3 of the preferred embodiment is designed to adjust the concentration of used paper pulp UPP manufactured in the pulp making section 2 in divided portions, and mainly includes a used paper pulp dividing portion 301 and a concentration adjusting portion 302 as shown in Fig. 11 and Fig. 12.

Accordingly, the concentration adjusting tank 26 in preferred embodiment 1 functions as pulp storage tank in this preferred embodiment, and this pulp storage tank 26 incorporates a lower limit float switch 45, an upper limit float switch 46, and a pulp dividing pump 306 of the pulp concentration adjusting section 3 mentioned below.

The used paper pulp dividing portion 301 divides a specified portion from the whole volume of the used paper pulp UPP manufactured in the pulp manufacturing section 2, and includes a pulp dividing tank 305 and a pulp dividing pump 306.

The pulp dividing tank 305 divides and stores a specified portion of the used paper pulp manufactured in the pulp making section 2 in preceding process, and specifically only a specified portion of the whole volume of used paper-pulp UPP stored in the pulp storage tank 26 is divided and supplied in the pulp dividing tank 305 by the pulp dividing pump 306. The pulp dividing tank 305 is installed in the concentration adjusting tank 307 of the concentration adjusting portion 302 as mentioned below.

The concentration adjusting portion 302 designed to add water for adjusting concentration to the used paper pulp UPP of specified portion divided by the pulp dividing portion 301, and specifically includes a concentration adjusting water feed unit composed of concentration adjusting tank 307 and water feed unit 13.

The concentration adjusting tank 307 contains and mixes the specified portion of used paper pulp UPP divided and contained in the pulp dividing tank 305 and water for adjusting concentration, and as mentioned above it is built in a double tank structure having the pulp dividing tank 305 incorporated in the used paper pulp dividing portion 301.

Specifically, the pulp dividing tank 305 is disposed at an upper position in the concentration adjusting tank 307, and a drain port 305a is provided in the bottom of the pulp dividing tank 305, and the used paper pulp UPP is supplied from the pulp dividing tank 305 into the concentration adjusting tank 307 by spontaneous drop by gravity.

The concentration adjusting tank 307 and the pulp dividing tank 305 are built in such double tank structure in order to allow the pulp concentration adjusting section 3 to adjust the concentration of used paper pulp UPP manufactured in the pulp making section 2 in divided portions, and also to reduce the size of the concentration adjusting section 3 and realize the entire structure of the used paper recycling apparatus 1 in a compact design.

The inner volume of the pulp dividing tank 305 is determined depending on the specified portion divided and supplied from the used paper pulp UPP stored in the pulp storage tank 26 (the divided portion to be adjusted in concentration in batch), and similarly the inner volume of the concentration adjusting tank 307 is determined depending on the sum of the volume of the pulp dividing tank 305, and the amount of water W corresponding to the used paper pulp UPP divided and stored in the pulp dividing tank 305.

In the illustrated preferred embodiment, if the pulp storage tank 26 is, for example, supposed to have a volume enough to process about 25 sheets of (about 100 g) of A4 format used paper UP in batch, and to store a corresponding amount of used paper pulp UPP, the inner volume of the pulp dividing tank 305 is set at a capacity capable of storing about 150 cc, and the inner volume of the concentration adjusting tank 307 is set to a capacity capable of storing about 3000 cc.

In this relation, a drain port 305a is provided in the bottom of the pulp dividing tank 305, and this drain port 305a is opened or closed by a drain valve 305b as shown in Fig. 4. This drain valve 305b is specifically an electromagnetic valve and is connected electrically to the control section 5. In the bottom of the concentration adjusting tank 307, a drain port 307a is provided, and this drain port 307a is opened or closed by a drain valve 307b. This drain valves 305b, 307b are specifically electromagnetic valves and are connected electrically to the control section 5.

The concentration adjusting water feed unit 13 supplies water into the concentration adjusting tank 307, and is used, as mentioned above, also as water feed source for supplying water to the agitating device 12 of the macerating unit 10. The concentration adjusting water feed unit 13 supplies water W to the concentration adjusting tank 307 so that the concentration adjusting water feed pump 27 may be driven and controlled by the control section 5, until the specified volume including the specified portion of used paper pulp UPP supplied in the concentration adjusting tank 307 from the pulp dividing tank 305.

Specifically, a specified portion (150 cc) of used paper pulp UPP is divided by the pulp dividing pump 306 from the whole volume of used paper pulp UPP supplied from the agitating tank 15 and contained in the pulp storage tank 26 (about 100 g of used paper UP + 5000 cc of water W), and is transferred and stored in the pulp dividing tank 305 of the used paper pulp dividing portion 301. On the other hand, corresponding to the divided specified portion of the used paper pulp UPP, by the concentration adjusting water feed pump 27, about 3000 cc of water W (to be precise, to be totaled to 3000 cc together with the specified portion (150 cc) of used paper pulp) is transferred and stored in the concentration adjusting tank 307 of the concentration adjusting portion 302 from the white water collect tank 20 of the concentration adjusting water feed unit 13.

In succession, the drain port 305a of the pulp dividing tank 305 is opened by the drain valve 305b, and the whole volume (150 cc) of used paper pulp UPP in the pulp dividing tank 305 drops spontaneously by gravity and is stored in the concentration adjusting tank 307, and is mixed with the water W in the concentration adjusting tank 307. As a result, pulp suspension PS of specified concentration (about 0.1% or target concentration) is mixed and prepared in the concentration adjusting tank 307.

In the concentration adjusting process, alternatively, (a) the used paper pulp UPP in the pulp dividing tank 305 is supplied into the concentration adjusting tank 307, and water W is supplied into the concentration adjusting tank 307 from the concentration adjusting water feed pump 27, and is mixed and diluted with the used paper pulp UPP in the concentration adjusting tank 307, and pulp suspension PS of specified concentration (about 0.1% or target concentration) is prepared, or (b) the used paper pulp UPP in the pulp dividing tank 305 is supplied into the concentration adjusting tank 307, and the water W is transferred and stored in the concentration adjusting tank 307 by the concentration adjusting water feed pump 27 through the pulp dividing tank 305, and is mixed and diluted with the used paper pulp UPP in the concentration adjusting tank 307, and pulp suspension PS of specified concentration (about 0.1% or target concentration) is prepared.

The target concentration of the pulp suspension to be prepared is determined in consideration of the paper making capacity of the paper making section 4 on the basis of data of preliminary experiment, and the concentration is set at about 0.1% in the illustrated preferred embodiment.

The pulp suspension PS prepared at concentration of about 0.1% (target concentration) in the concentration adjusting tank 307 of the pulp concentration adjusting section 3 is entirely supplied and stored in the pulp feed tank 85 in the paper making section 4 of next process by falling spontaneously by gravity as the drain port 307a in the bottom of the concentration adjusting tank 307 is released by the drain valve 307b.

The concentration adjusting interval for adjusting the concentration of used paper pulp UPP in the pulp concentration adjusting section 3 by divided portions is set so that the supply capacity of the pulp suspension PS already adjusted in concentration to the paper making section 4 in later process may surpass at least the paper making capacity in the paper making section 4.

Specifically, the concentration adjusting interval is set at a timing to such an extent that the pulp suspension PS in the pulp feed tank 85 may not be less than a specified value, and is controlled so that the paper making section 4 may process about 3 liters of pulp suspension PS in about 1 minute, so that the concentration adjusting interval by the pulp adjusting section 3 may be set within 1 minute.

Thus, the concentration is adjusted by the pulp concentration adjusting section 3 not in batch, but in small divided portions, and the water consumption is saved substantially, and the shape and size of the concentration adjusting tank 307 can be notably reduced, and the entire used paper recycling apparatus 1 may be built in a compact design.

The cleaning system CS of the preferred embodiment is slightly modified from the structure in preferred embodiment 1 because the concentration is adjusted in divided portions in the pulp concentration adjusting section 3.

Specifically, the cleaning system of the preferred embodiment is slightly modified in the cleaning water circulation routes R₁ to R₆ as shown in Fig. 12.

The cleaning water circulation routes R₁ to R₆ are composed specifically of the route R₁ from the white water collect tank 20 to the agitating tank 15, the route R₂ from the agitating tank 15 to the mashing tank 33, the route R₃ from the mashing tank 33 to the agitating tank 15, the route R₄ from the pulp storage tank 26 to the pulp dividing tank 305, the route R₅ from the white water collect tank 20 to the concentration adjusting tank 307, and the route R₆ from the pulp feed tank 85 to the pulp feed unit 56.

The cleaning control unit 120, in order to execute the following processes (1) to (6), interlocks and controls the water feed pumps 21, 27 of the water feed unit 13 and the circulation pumps 18, 306, 89, and interlocks with driving of these pumps 21, 18, 306, 27, 89, and drives and controls the pulp making section 2, pulp concentration adjusting section 3, and paper making section 4 to be cleaned.

That is, same as in preferred embodiment 1, when a cleaning operation switch provided aside from the normal operation switch not shown is turned on, the cleaning control section 120 executes the following cleaning processes (1) to (6), and the white water W dewatered and collected in the paper making section 4 is used as cleaning water, and is circulated to the pulp making section 2 and pulp concentration adjusting section 3, and the pulp making section 2 and pulp concentration adjusting section 3 are cleaned.
(1) The white water W dewatered and collected in the white water collect tank 20 is supplied by the water feed pump 21 into the agitating tank 15 of the pulp making section 2 by way of the route R₁, and is further poured into the mashing tank 33 through the route R₂ by the feed pump 18.
   In interlock, the agitating device 12 of the agitating tank 15 and the mashing members 31, 32 of the mashing tank 33 are relatively rotated and driven, and the cleaning water W circulates from the agitating tank 15, mashing tank 33, route R₃, and back to agitating tank 15, and these tanks 15, 33 are cleaned.
(2) After cleaning of the tanks 15, 33, the whole volume of cleaning water W in the agitating tank 15 falls into the pulp storage tank 26, and the inside of this pulp storage tank 26 is cleaned.
(3) After cleaning of the pulp storage tank 26, the cleaning water W in the storage tank 26 is supplied into the pulp dividing tank 305 through the route R₄ by the pulp dividing pump 306, and the inside of the pulp dividing tank 305 is cleaned, and the water drops into the concentration adjusting tank 307. On the other hand, in the concentration adjusting tank 307, other cleaning water W is directly supplied from the white water collect tank 20 through the route R₅. By these supplies of cleaning water W, the inside of the concentration adjusting tank 307 is cleaned.
(4) After cleaning of the concentration adjusting tank 307, the cleaning water W drops to be supplied into the pulp feed tank 85, and the inside of the pulp feed tank 85 is cleaned.
(5) After cleaning of the pulp feed tank 85, the used cleaning water W collected in the pulp feed tank 85 is supplied into the pulp feed unit 56 of the paper making section 4 through the route R₄ by the second suspension feed pump 89, and passes through the paper making process of the mesh belt 60, and the used paper pulp UPP contained in the cleaning water W is separated (purified) as recycled paper RP (wet paper RP₀), and is collected again in the white water collect tank 20.
   When the used cleaning water W in the pulp feed tank 85 is spent up, one cycle of the cleaning process is terminated.
(6) The cycle of processes (1) to (5) is repeated plural times.

The circulation cleaning by the cleaning system CS consisting of processes (1) to (6) is executed, in this preferred embodiment, same as in preferred embodiment 1, every time after end of the used paper recycling operation (normal operation of pulp making section 2, pulp concentration adjusting section 3, and paper making section 4), and aside from manual operation by independent operation switches for normal operation and cleaning operation as explained in the preferred embodiment, these operations may be changed over automatically, and, for example, the circulation cleaning by white water W dewatered and collected in the paper making section 4 may be started automatically upon end of the day's used paper recycling operation of used paper recycling apparatus 1, and in this case it is particularly preferred to execute the cleaning operation by the cleaning system CS automatically in the nighttime.

Other structures and actions are same as in preferred embodiment 1.

As the foregoing preferred embodiments are intended to explain the technical aspects of the invention, the present preferred embodiments are therefore illustrative and not restrictive, since the scope of the invention is defined by the appended claims.

## Claims

1. A cleaning method for cleaning sections (2, 3) of a furniture sized used paper recycling apparatus, similar in size and shape to office equipment such as a document rack, locker, desk, copier or personal computer, so that it is small enough to be installed at the site of origin of used paper, wherein said apparatus sections include
a pulp making section (2) for manufacturing used paper pulp (UPP) by macerating and mashing said used paper (UP),
a pulp concentration adjusting section (3) for adjusting the concentration of said used paper pulp (UPP) manufactured in the pulp making section (2), and
a paper making section (4) for manufacturing recycled paper from said used paper pulp (UPP) in the pulp concentration adjusting section (3); said method comprising the steps of:
circulating water (W) that has been extracted in the paper making section (4) by dewatering the pulp suspension (PS) from said pulp concentration adjusting section (3) and then collected in said paper making section (13, 20), as cleaning water, in at least said pulp making section (2) and said pulp concentration adjusting section (3), in order to clean said pulp making section (2) and said pulp concentration adjusting section (3) after the end of the used paper recycling operation.

2. A cleaning method for a used paper recycling apparatus according to claim 1, wherein the cleaning water is circulated in the pulp making section and pulp concentration adjusting section a plurality of times.

3. A cleaning method for a used paper recycling apparatus according to claim 1 or claim 2, wherein the said circulation of cleaning water is executed at the end of every used paper recycling operation.

4. A cleaning method for a used paper recycling apparatus according to any preceding claim, wherein the said circulation of cleaning water is executed at the end of each day's used paper recycling activity.

5. A cleaning system for cleaning sections (2, 3) of a furniture sized used paper recycling apparatus, similar in size and shape to office equipment such as a document rack, locker, desk, copier or personal computer, so that it is small enough to be installed at the site of origin of used paper (UP), wherein said apparatus sections (2, 3) Include:
a pulp making section (2) for manufacturing used paper pulp (UPP) by macerating and mashing used paper (UP),
a pulp concentration adjusting section (3) for adjusting the concentration of used paper pulp (UPP) manufactured in the pulp making section (2), and
a paper making section (4) for manufacturing recycled paper by making recycled paper from the used paper pulp (UPP) that has had the concentration thereof adjusted in the pulp concentration adjusting section (3), the system comprising a water circulation system having means (R₁ - R₆, 18, 21, 27, 44, 89) to feed back and to circulate the water extracted by dewatering In the paper making section (4) in at least the pulp making section (2) and in the pulp concentration adjusting section (3);
**characterized in that** said means allow cleaning of the pulp making section (2) and the pulp concentrating adjusting section (3) after the end of the used paper recycling operation.

6. A cleaning system according to Claim 5, further comprising:
a cleaning water feed source (13) for supplying cleaning water into the pulp making section,
a cleaning water circulation route (R1-R6) for circulating water from the cleaning water feed source passing through the pulp making section (2) and pulp concentration adjusting section (3) and feeding back to the cleaning water feed source,
a circulation pump installed in the cleaning water circulation route for circulating the cleaning water in the cleaning water circulation route, and
a cleaning control unit (120) for interlocking and controlling the cleaning water feed source and the circulation pump, wherein the cleaning water feed source includes a white water collect tank (20) for collecting the white water filtered and extracted by dewatering used paper pulp in the paper making section, and a water feed pump (21) for supplying the white water in the white water collect tank to the pulp making section (2) as cleaning water.

7. A cleaning system according to claim 6, wherein the cleaning control unit (120) interlocks and controls the cleaning water feed source and the circulation pump so as to clean the pulp making section (2) and pulp concentration adjusting section (3) by circulating the water extracted by dewatering used paper pulp (UPP) and collected in the paper making section as cleaning water at least in the pulp making section (2) and pulp concentration adjusting section (3).

8. A cleaning system according to claim 6, wherein the cleaning control unit (120) drives and controls the pulp making section (2) and pulp concentration adjusting section (3) to be cleaned, in interlock with driving of the cleaning water feed source and circulation pump.

9. A furniture sized used paper recycling apparatus with a cleaning system according to any one of claims 5 to 8.

## Patentansprüche

1. Reinigungsverfahren zum Reinigen von Abschnitten (2, 3) einer Vorrichtung zum Recycling von gebrauchtem Papier in Möbelgröße, die in Größe und Form ähnlich zu Büroeinrichtung wie ein Dokumentenregal, Schrank, Schreibtisch, Kopierer oder Personalcomputer ist, so dass sie klein genug ist, um am Ursprungsort von gebrauchtem Papier installiert zu werden, wobei die Abschnitte der Vorrichtung enthalten:
einen Pulpe-Herstellungsabschnitt (2) zum Erzeugen von Pulpe aus gebrauchtem Papier (UPP) durch Mazerieren und Zerdrücken des gebrauchten Papiers (UP),
einen Pulpekonzentration-Anpassungsabschnitt (3) zum Anpassen der Konzentration der in dem Pulpe-Herstellungsabschnitt (2) erzeugten Pulpe aus gebrauchtem Papier (UPP), und
einen Papierherstellungsabschnitt (4) zum Erzeugen von Recyclingpapier aus der Pulpe aus gebrauchtem Papier (UPP) in dem Pulpekonzentration-Anpassungsabschnitt (3); das Verfahren die folgenden Schritte umfassend:
Zirkulieren von Wasser (W), das in dem Papierherstellungsabschnitt (4) durch Entwässern der Pulpesuspension (PS) aus dem Pulpekonzentration-Anpassungsabschnitt (3) extrahiert und dann in dem Papierherstellungsabschnitt (13, 20) gesammelt wurde, als Reinigungswasser in mindestens dem Pulpe-Herstellungsabschnitt (2) und dem Pulpekonzentration-Anpassungsabschnitt (3), um den Pulpe-Hersteltungsabschnitt (2) und den Pulpekonzentration-Anpassungsabschnitt (3) nach dem Ende des Recyclingvorgangs von gebrauchtem Papiers zu reinigen.

2. Reinigungsverfahren für eine Vorrichtung zum Recycling von gebrauchtem Papier nach Anspruch 1, wobei das Reinigungswasser in dem Pulpe-Herstellungsabschnitt und Pulpekonzentration-Anpassungsabschnitt eine Vielzahl von Malen zirkuliert wird.

3. Reinigungsverfahren für eine Vorrichtung zum Recycling von gebrauchtem Papier nach Anspruch 1 oder Anspruch 2, wobei das Zirkulieren von Reinigungswasser an dem Ende jedes Recyclingvorgangs von gebrauchtem Papier durchgeführt wird.

4. Reinigungsverfahren für eine Vorrichtung zum Recycling von gebrauchtem Papier nach einem der vorstehenden Ansprüche, wobei das Zirkulieren von Reinigungswasser jeden Tag am Ende der gebrauchtes Papier betreffenden Recyclingaktivität durchgeführt wird.

5. Reinigungssystem zum Reinigen von Abschnitten (2, 3) einer Vorrichtung zum Recycling von gebrauchtem Papier in Möbelgröße, die in Größe und Form ähnlich zu Büroeinrichtung wie ein Dokumentenregal, Schrank, Schreibtisch, Kopierer oder Personalcomputer ist, so dass sie klein genug ist, um am Ursprungsort von gebrauchtem Papier (UP) installiert zu werden, wobei die Abschnitte (2, 3) der Vorrichtung enthalten:
einen Pulpe-Herstellungsabschnitt (2) zum Erzeugen von Pulpe aus gebrauchtem Papier (UPP) durch Mazerieren und Zerdrücken des gebrauchten Papiers (UP),
einen Pulpekonzentration-Anpassungsabschnitt (3) zum Anpassen der Konzentration von in dem Pulpe-Herstellungsabschnitt (2) erzeugter Pulpe aus gebrauchtem Papier (UPP), und
einen Papierherstellungsabschnitt (4) zum Erzeugen von Recyclingpapier durch Herstellen von Recyclingpapier aus der Pulpe aus gebrauchtem Papier (UPP), deren Konzentration in dem Pulpekonzentration-Anpassungsabschnitt (3) angepasst wurde, wobei das System ein Wasserzirkulationssystem umfasst, das Mittel (R₁ - R₆, 18, 21, 27, 44, 89) zum Rückführen und zum Zirkulieren des durch Entwässern in dem Papierherstellungsabschnitt (4) extrahierten Wassers in mindestens dem Pulpe-Herstellungsabschnitt (2) und in dem Pulpekonzentration-Anpassungsabschnitt (3) aufweist;
**dadurch gekennzeichnet, dass** die Mittel Reinigung des Pulpe-Herstellungsabschnitts (2) und des Pulpekonzentration-Anpassungsabschnitts (3) nach dem Ende des Recyclingvorgangs von gebrauchtem Papier zulassen.

6. Reinigungssystem nach Anspruch 5, weiter umfassend:
eine Reinigungswasser-Speisequelle (13) zum Zuführen von Reinigungswasser in den Pulpe-Herstellungsabschnitt,
eine Reinigungswasser-Zirkulationsroute (R1-R6) zum Zirkulieren von Wasser von der Reinigungswasser-Speisequelle, Durchfließen durch den Pulpe-Herstellungsabschnitt (2) und den Pulpekonzentration-Anpassungsabschnitt (3) und Zurückführen zu der Reinigungswasser-Speisequelle,
eine Zirkulationspumpe, die in der Reinigungswasser-Zirkulationsroute zum Zirkulieren des Reinigungswassers in der Reinigungswasser-Zirkulationroute installiert ist, und
eine Reinigungssteuereinheit (120) zum Verriegeln und Steuern der Reinigungswasser-Speisequelle und der Zirkulationspumpe, wobei die Reinigungswasser-Speisequelle einen Weißwasser-Sammeltank (20) zum Sammeln des durch Entwässern von Pulpe aus gebrauchtem Papier in dem Papierherstellungsabschnitt gefilterten und extrahierten Weißwassers und eine Wasserspeisepumpe (21) zum Zuführen des Weißwassers in dem Weißwasser-Sammeltank zu dem Pulpe-Herstellungsabschnitt (2) als Reinigungswasser umfasst.

7. Reinigungssystem nach Anspruch 6, wobei die Reinigungssteuereinheit (120) die Reinigungswasser-Speisequelle und die Zirkulationspumpe verriegelt und steuert, um den Pulpe-Herstellungsabschnitt (2) und Pulpekonzentration-Anpassungsabschnitt (3) durch Zirkulieren des durch Entwässern von Pulpe aus gebrauchtem Papier (UPP) extrahierten und in dem Papierherstellungsabschnitt gesammelten Wassers als Reinigungswasser in mindestens dem Pulpe-Herstellungsabschnitt (2) und dem Pulpekonzentration-Anpassungsabschnitt (3) zu reinigen.

8. Reinigungssystem nach Anspruch 6, wobei die Reinigungssteuereinheit (120) den zu reinigenden Pulpe-Herstellungsabschnitt (2) und Pulpekonzentration-Anpassungsabschnitt (3) in Verriegelung mit dem Antrieb der Reinigungswasser-Speisequelle und Zirkulationspumpe antreibt und steuert.

9. Vorrichtung zum Recycling von gebrauchtem Papier in Möbelgröße mit einem Reinigungssystem nach einem der Ansprüche 5 bis 8.

## Revendications

1. Procédé de nettoyage pour nettoyer des sections (2, 3) d'un appareil de recyclage de papiers usés de la taille d'un meuble, ayant une taille et une forme similaires à un équipement de bureau, par exemple d'une étagère à documents, d'une armoire, d'un bureau, d'un copieur ou d'un ordinateur personnel, de sorte à être assez petit pour pouvoir être installé au niveau du site de l'origine des papiers usés, lesdites sections de l'appareil englobant
une section de fabrication de pâte (2) pour fabriquer de la pâte de papiers usés (UPP) en macérant et broyant lesdits papiers usés (UP) ;
une section d'ajustement de la concentration de la pâte (3) pour ajuster la concentration de ladite pâte de papiers usés (UPP) produite dans la section de production de la pâte (2) ; et
une section de fabrication de papier (4) pour fabriquer du papier recyclé à partir de ladite pâte de papiers usés (UPP) dans la section d'ajustement de la concentration de la pâte (3) ; ledit procédé comprenant les étapes ci-dessous :
circulation d'eau (W) ayant été extraite dans la section de fabrication de papier (4) en essorant la suspension de pâte (PS) provenant de ladite section d'ajustement de la concentration de la pâte (3) et collectée ensuite dans ladite section de fabrication de papier (13, 20), comme eau de nettoyage, dans au moins ladite section de production de pâte (2) et ladite section d'ajustement de la concentration de la pâte (3), en vue de nettoyer ladite section de production de la pâte (2) et ladite section d'ajustement de la concentration de la pâte (3) après l'achèvement de l'opération de recyclage des papiers usés.

2. Procédé de nettoyage pour un appareil de recyclage de papiers usés selon la revendication 1, dans lequel l'eau de nettoyage est entraînée à circuler à plusieurs reprises dans la section de production de pâte et dans la section d'ajustement de la concentration de la pâte.

3. Procédé de nettoyage pour un appareil de recyclage de papiers usés selon la revendication 1 ou 2, dans lequel ladite circulation de l'eau de nettoyage est effectuée lors de l'achèvement de chaque opération de recyclage de papiers usés.

4. Procédé de nettoyage pour un appareil de recyclage de papiers usés selon l'une quelconque des revendications précédentes, dans lequel ladite circulation de l'eau de nettoyage est effectuée lors de l'achèvement de l'activité de recyclage de papiers usés de chaque jour.

5. Système de nettoyage pour nettoyer des sections (2, 3) d'un appareil de recyclage de papiers usés de la taille d'un meuble, ayant une taille et une forme similaires à un équipement de bureau, par exemple d'une étagère à documents, d'une armoire, d'un bureau, d'un copieur ou d'un ordinateur personnel, de sorte à être assez petit pour pouvoir être installé au niveau du site de l'origine des papiers usés (UP), lesdites sections de l'appareil (2, 3) englobant :
une section de fabrication de pâte (2) pour fabriquer de la pâte de papiers usés (UPP) en macérant et broyant les papiers usés (UP) ;
un section d'ajustement de la concentration de la pâte (3), pour ajuster la concentration de la pâte de papiers usés (UPP) fabriquée dans la section de fabrication de la pâte (2) ; et
une section de fabrication de papier (4), pour fabriquer du papier recyclé en fabriquant du papier recyclé à partir de la pâte de papiers usés (UPP), dont la concentration a été ajustée dans la section d'ajustement de la concentration de la pâte (3), le système comprenant un système de circulation d'eau comportant des moyens (R₁-R₆, 18, 21, 27, 44, 89) pour assurer le retour et la circulation de l'eau extraite par essorage dans la section de fabrication de papier (4) dans au moins la section de fabrication de pâte (2) et la section d'ajustement de la concentration de la pâte (3) ;
**caractérisé en ce que** lesdits moyens permettent le nettoyage de la section de fabrication de pâte (2) et de la section d'ajustement de la concentration de la pâte (3) lors de l'achèvement de l'opération de recyclage des papiers usés.

6. Système de nettoyage selon la revendication 5, comprenant en outre :
une source d'alimentation d'eau de nettoyage (13) pour amener de l'eau de nettoyage dans la section de fabrication de pâte ;
une trajectoire de circulation de l'eau de nettoyage (R1-R6) pour assurer la circulation de l'eau provenant de la source d'alimentation de l'eau de nettoyage, son passage à travers la section de fabrication de pâte (2) et la section d'ajustement de la concentration de la pâte(3) et son retour vers la source d'alimentation de' l'eau de nettoyage ;
une pompe de circulation, installée dans la trajectoire de circulation de l'eau de nettoyage pour faire circuler l'eau de nettoyage dans la trajectoire de circulation de l'eau de nettoyage ; et
une unité de commande du nettoyage (120) pour assurer l'interverrouillage et le contrôle de la source d'alimentation de l'eau de nettoyage et de la pompe de circulation, la source d'alimentation de l'eau de nettoyage englobant un réservoir de collecte d'eau blanche (20) pour collecter l'eau blanche filtrée et extraite par essorage de la pâte de papiers usés dans la section de fabrication de papier, et une pompe d'alimentation d'eau (21) pour amener l'eau blanche contenue dans le réservoir de collecte de l'eau blanche vers la section de fabrication de pâte (2) comme eau de nettoyage.

7. Système de nettoyage selon la revendication 6, dans lequel l'unité de commande du nettoyage (120) assure l'interverrouillage et le contrôle de la source d'alimentation d'eau de nettoyage et de la pompe de circulation, de sorte à nettoyer la section de fabrication de pâte (2) et la section d'ajustement de la concentration de la pâte (3) en faisant circuler l'eau extraite par essorage des papiers usés (UPP) collectée dans la section de fabrication de papier comme eau de nettoyage, au moins dans la section de fabrication de pâte (2) et la section d'ajustement de la concentration de la pâte (3).

8. Système de nettoyage selon la revendication 6, dans lequel l'unité de commande du nettoyage (120) entraîne et contrôle la section de fabrication de pâte (2) et la section d'ajustement de la concentration de la pâte (3) devant être nettoyées, en liaison avec l'entraînement de la source d'alimentation d'eau de nettoyage et la pompe de circulation.

9. Appareil de recyclage de papiers usés de la taille d'un meuble comportant un système de nettoyage selon l'une quelconque des revendications 5 à 8.
